(19) Europäisches Patentamt
European Patent Office
Office européen des brevets

(11) EP 2 949 710 B1

(12) **EUROPEAN PATENT SPECIFICATION**

(45) Date of publication and mention of the grant of the patent:
**15.05.2019 Bulletin 2019/20**

(21) Application number: **15169546.7**

(22) Date of filing: **28.05.2015**

(51) Int Cl.:
***B29K 669/00*** *(2006.01)*
***C09D 11/00*** *(2014.01)*
***C09D 11/38*** *(2014.01)*
***B29C 45/14*** *(2006.01)*
***B29C 37/00*** *(2006.01)*
***C08G 77/00*** *(2006.01)*
***B29C 35/08*** *(2006.01)*
***C09D 11/101*** *(2014.01)*
***C09D 11/40*** *(2014.01)*
***B29C 45/16*** *(2006.01)*
***C09D 11/10*** *(2014.01)*

(54) **RADIATION-CURABLE INK COMPOSITION, INK SET, INKJET RECORDING METHOD, DECORATIVE SHEET, DECORATIVE SHEET MOLDED PRODUCT, PROCESS FOR PRODUCING IN-MOLD MOLDED ARTICLE, AND IN-MOLD MOLDED ARTICLE**

STRAHLUNGSHÄRTBARE TINTENZUSAMMENSETZUNG, TINTENSATZ, TINTENSTRAHLAUFZEICHNUNGSVERFAHREN, DEKORFOLIE, DEKORFOLIENFORMPRODUKT, VERFAHREN ZUR HERSTELLUNG EINES IN-MOLD-FORMARTIKELS UND GEFORMTER IN-MOLD-FORMARTIKEL

COMPOSITION D'ENCRE DE TYPE DURCISSANT AU RAYONNEMENT, KIT D'ENCRAGE, PROCÉDÉ D'ENREGISTREMENT À JET D'ENCRE, FEUILLE DÉCORATIVE, PRODUIT MOULÉ DANS UNE FEUILLE DÉCORATIVE, PROCÉDÉ DE PRODUCTION D'UN ARTICLE MOULÉ DANS UN MOULE ET ARTICLE MOULÉ DANS UN MOULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.05.2014 JP 2014112289**

(43) Date of publication of application:
**02.12.2015 Bulletin 2015/49**

(73) Proprietor: **Fujifilm Corporation**
**Minato-ku**
**Tokyo (JP)**

(72) Inventor: **Araki, Kenjiro**
**Ashigarakami-gun, Kanagawa (JP)**

(74) Representative: **Klunker IP**
**Patentanwälte PartG mbB**
**Destouchesstraße 68**
**80796 München (DE)**

(56) References cited:
**EP-A1- 2 088 176**
**WO-A1-99/31161**
**GB-A- 2 489 321**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention relates to a radiation-curable ink composition, an ink set, an inkjet recording method, a decorative sheet, a decorative sheet molded product, a process for producing an in-mold molded article, and an in-mold molded article.

As image recording methods for forming an image on a recording medium such as paper based on an image data signal, there are an electrophotographic system, sublimation type and melt type thermal transfer systems, an inkjet system, etc. For example, with regard to the inkjet system, since it can be carried out using inexpensive equipment and an image is formed directly on a recording medium by discharging an ink composition only on a required image area, the ink composition can be used efficiently and the running cost is low. Furthermore, there is little noise and it is excellent as an image recording device.

In accordance with the inkjet method, printing is possible not only on plain paper but also a non-water-absorbing recording medium such as a plastic sheet or a metal plate, but achieving high speed when printing and achieving high image quality are important issues, and the inkjet method has the property that the time taken for drying and curing a droplet after printing greatly influences the productivity of a printed material and the sharpness of an image obtained by printing.

As one inkjet method, there is a recording method using an ink for inkjet recording that can be cured by irradiation with actinic radiation. In accordance with this method, the productivity of printed images is improved and a sharp image can be formed by curing an ink droplet by applying actinic radiation immediately after ink discharge or after a predetermined time has elapsed.

As conventional ink compositions, ink compositions described in JP-A-2013-216784 (JP-A denotes a Japanese unexamined patent application publication), JP-A-2013-177580, JP-A-2010-132827, and JP-A-2010-222386 are known.

GB 2 489 321 A discloses compositions suitable for ink jet printing. The compositions comprise ethylenically unsaturated compounds, optionally substituted acyldiphenylphosphine oxide, optionally substituted thioxanthone, optionally substituted thiochroman-4-one, and a colorant.

WO 99/31161 A1 discloses radiation curable coating compositions, in particular for coating optical fibres. The compositions comprise at least one aliphatic urethane acrylate oligomer, at least one acrylated or methacrylated compound selected from the group consisting of isobornyl acrylate, isobornyl methacrylate, alkanediol diacrylates, alkanediol dimethacrylates, alkoxylated derivatives thereof, and mixtures thereof, a photoinitiator, and at least one silicone compound which reduces the coefficient of friction of the radiation-cured coating.

EP 2 088 176 A1 discloses ink compositions, an ink jet recording method, a printed material, and a molded printed material. The ink compositions comprise a compound having an ethylenically unsaturated double bond and a silicone chain, a polymerizable monomer, and a radical polymerization initiator. At least 75 wt % of the polymerizable monomer are a monofunctional polymerizable monomer selected from the group consisting of a monofunctional acrylate, a monofunctional methacrylate, a monofunctional vinyloxy compound, a monofunctional N-vinyl compound, a monofunctional ethylenically unsaturated carboxylic acid compound, a monofunctional acrylamide, and a monofunctional methacrylamide.

It is an object of the present invention to provide a radiation-curable ink composition that can give an image having excellent stretchability and blocking resistance and having suppressed sticking to a mold when molding, an ink set comprising the radiation-curable ink composition, and an inkjet recording method, decorative sheet, decorative sheet molded product, process for producing an in-mold molded article, and in-mold molded article that employ the radiation-curable ink composition.

The above object has been achieved by means described in <1>, <12>, <13>, <14>, <15>, <16> or <17> below. They are shown below together with <2> to <11 >, which are preferred embodiments.

<1> A radiation-curable ink composition comprising: a polymerizable compound as Component A; a photopolymerization initiator as Component B; and two or more types of surfactants as Component C, wherein Component A comprises a urethane oligomer having a polymerizable group and a partial structure represented by Formula a-1 below, Component C comprises at least a surfactant that has a polymerizable group and a surfactant that does not have a polymerizable group, and the mass ratio of a content C1 of the surfactant that has a polymerizable group and a content C2 of the surfactant that does not have a polymerizable group is C1:C2=35:1 to 1:10,

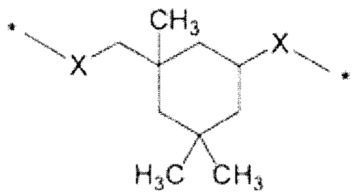

(a-1)

wherein the Xs independently denote a urethane bond (-NH-CO-), an ester bond (-CO-O-), an ethyleneoxy (EO) group, a propyleneoxy (PO) group, or an alkylene group, and * denotes the position of bonding.

<2> The radiation-curable ink composition according to <1> above, wherein Component A comprises at least 80 parts by mass of a monofunctional polymerizable compound relative to a content of 100 parts by mass of Component A in the ink composition,

<3> the radiation-curable ink composition according to <1> or <2> above, wherein at least one type of surfactant of Component C is a silicone-based surfactant,

<4> the radiation-curable ink composition according to any one of <1> to <3> above, wherein the ability to reduce surface tension of the surfactant that does not have a polymerizable group is higher than the ability to reduce surface tension of the surfactant that has a polymerizable group,

<5> the radiation-curable ink composition according to any one of <1> to <4> above, wherein the total content of Component C is at least 0.03 mass% but less than 10 mass% relative to the total mass of the ink composition,

<6> the radiation-curable ink composition according to any one of <1> to <5> above, wherein Component A comprises an N-vinyl compound, and preferably the content of the N-vinyl compound is 10 to 40 mass% relative to the total mass of the ink composition,

<7> the radiation-curable ink composition according to any one of <1> to <6> above, wherein the radiation-curable ink composition further comprises an inert methyl methacrylate homopolymer and/or copolymer,

<8> the radiation-curable ink composition according to any one of <1> to <7> above, wherein the content of the urethane oligomer is 0.1 to 10 mass% relative to the total mass of the ink composition,

<9> the radiation-curable ink composition according to any one of <1> to <8> above, wherein the radiation-curable ink composition further comprises a colorant, preferably a white colorant, as Component D,

<10> the radiation-curable ink composition according to any one of <1> to <9> above, wherein Component B comprises a bisacylphosphine oxide compound and a monoacylphosphine oxide compound

<11> the radiation-curable ink composition according to any one of <1> to <10> above, wherein Component B comprises a bisacylphosphine oxide compound, a monoacylphosphine oxide compound, and a thioxanthone compound,

<12> an ink set comprising at least one type of radiation-curable ink composition according to any one of <1> to <11> above, wherein preferably said at least one type of radiation-curable ink composition is a white ink composition,

<13> an inkjet recording method, comprising a step of discharging the radiation-curable ink composition according to any one of <1> to <11> onto a recording medium by an inkjet method; and a step of irradiating the discharged ink composition with actinic radiation to thus cure the ink composition,

<14> a decorative sheet comprising a cured image layer provided above a resin sheet, the cured image layer being formed by curing the radiation-curable ink composition according to any one of <1> to <11> above,

<15> a decorative sheet molded product obtained by subjecting the decorative sheet according to <14> above to vacuum forming, pressure forming, or vacuum/pressure forming, wherein preferably the decorative sheet molded product is further subjected to hole making after said vacuum forming, pressure forming, or vacuum/pressure forming,

<16> a process for producing an in-mold molded article, comprising a step of placing the decorative sheet according to <14> above or the decorative sheet molded product according to <15> above on an inner wall of a cavity part formed by a plurality of molds; and a step of injecting a molten resin into the cavity part via a gate, and

<17> an in-mold molded article obtained by the production process according to <16> above.

In accordance with the present invention, there can be provided a radiation-curable ink composition that can give an image having stretchability and blocking resistance and having suppressed sticking to a mold when molding, an ink set comprising the radiation-curable ink composition, and an inkjet recording method, decorative sheet, decorative sheet molded product, process for producing an in-mold molded article, and in-mold molded article that employ the radiation-curable ink composition.

The present invention is explained in detail below.

In the present specification, the notation 'xx to yy' means a numerical range that includes xx and yy. Furthermore, 'a polymerizable compound', etc. is also simply called 'Component A', etc.

The term '(meth)acrylate', etc. has the same meaning as 'acrylate and/or methacrylate', etc., and the same applies below.

Furthermore, in the present invention, 'mass%' and 'wt%' have the same meaning, and 'parts by mass' and 'parts by weight' have the same meaning.

In the present invention, a combination of preferred embodiments is a more preferred embodiment.

1. Radiation-curable ink composition

The radiation-curable ink composition of the present invention (hereinafter, also called simply an 'ink composition') comprises a particular polymerizable compound as Component A (described below), a photopolymerization initiator as Component B, and two or more types of surfactants as Component C, Component C comprising at least a surfactant that has a polymerizable group and a surfactant that does not have a polymerizable group, and the mass ratio of a content $C^1$ of the surfactant that has a polymerizable group and a content $C^2$ of the surfactant that does not have a polymerizable group being $C^1$:$C^2$ = 35:1 to 1:10.

The radiation-curable ink composition of the present invention may suitably be used as a radiation-curable ink composition for molding, and may more suitably be used as a radiation-curable ink composition for vacuum forming, pressure forming, or vacuum/pressure forming.

Furthermore, the radiation-curable ink composition of the present invention may suitably be used as a radiation-curable ink composition for molding and hole making.

Moreover, the radiation-curable ink composition of the present invention may suitably be used as the radiation-curable inkjet ink composition of the present invention.

The ink composition of the present invention is an ink composition that can cure upon exposure to actinic radiation and is also an oil-based ink composition. The 'actinic radiation' referred to in the present invention is not particularly limited as long as it is actinic radiation that can provide energy that enables an initiating species to be generated in the ink composition when irradiated, and broadly includes $\alpha$ rays, $\gamma$ rays, X rays, ultraviolet rays, visible light, and an electron beam. Among them, ultraviolet rays and an electron beam are preferable from the viewpoint of curing sensitivity and the availability of equipment, and ultraviolet rays are particularly preferable. The ink composition of the present invention is therefore preferably an ink composition that can cure upon exposure to ultraviolet rays as actinic radiation.

As a result of a detailed investigation by the present inventors, it has been found that an ink film (image) obtained using a conventional radiation-curable ink composition causes sticking to a mold when molding; if in order to improve the sticking to a mold, the hardness of a cured ink film is increased or a mold release agent is added, the problems occur that the stretchability is degraded thus making the molding processability poor, and blocking occurs. The present inventors have also found that there is the problem that, particularly with regard to an ink film obtained using a conventional radiation-curable ink composition comprising only a surfactant that has a polymerizable group, part of the film polymerized with the surfactant sticks to a mold during molding, and there is also the problem that an ink film obtained using a conventional radiation-curable ink composition comprising only a surfactant that does not have a polymerizable group not only sticks to a mold during molding but also causes blocking.

As a result of an intensive investigation by the present inventors, it has been found that the above problems have been solved by the use of a radiation-curable ink composition comprising at least a surfactant that has a polymerizable group and a surfactant that does not have a polymerizable group, the mass ratio of a content $C^1$ of the surfactant that has a polymerizable group and a content $C^2$ of the surfactant that does not have a polymerizable group being $C^1$:$C^2$ = 35:1 to 1:10, and the present invention has thus been accomplished.

Each component in the radiation-curable ink composition is explained in detail below.

(Component A) Polymerizable compound

The radiation-curable ink composition of the present invention comprises a polymerizable compound as Component A. Component A comprises a urethane oligomer having a polymerizable group and a partial structure represented by Formula a-1

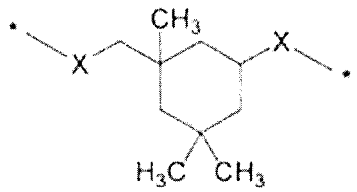

(a - 1)

wherein the Xs independently denote a urethane bond (-NH-CO-), an ester bond (-CO-O-), an ethyleneoxy (EO) group, a propyleneoxy (PO) group, or an alkylene group, and * denotes the position of bonding.

Further polymerizable compounds of Component A are not particularly limited as long as they are compounds comprising at least one polymerizable group, and they may be in any form such as a monomer, an oligomer, or a polymer.

The polymerizable group may be either a cationically polymerizable group or a radically polymerizable group, examples of the cationically polymerizable group including an epoxy group, an oxetanyl group, and a vinyl ether group, and examples of the radically polymerizable group including an ethylenically unsaturated group (ethylenically unsaturated bond).

The polymerizable group is preferably an ethylenically unsaturated group.

In the present invention, the ink composition preferably comprises as the polymerizable compound an ethylenically unsaturated compound, and more preferably comprises a radically polymerizable compound.

Furthermore, examples of the polymerizable compound include a monofunctional polymerizable compound and a polyfunctional polymerizable compound.

Component A in the present invention is a polymerizable compound other than Component C, which is described later.

In the present invention, a 'monomer' means a compound having a molecular weight (weight-average molecular weight when there is molecular weight distribution) of no greater than 1,000. The molecular weight (weight-average molecular weight when there is molecular weight distribution) is preferably 50 to 1,000.

An 'oligomer' usually means a polymer having a limited number (usually 5 to 100) of monomer-derived constituent units, and the weight-average molecular weight of an oligomer is greater than 1,000 but less than 30,000.

A 'polymer' is a compound having a weight-average molecular weight greater than the oligomer region, and the weight-average molecular weight is at least 30,000.

Weight-average molecular weight is measured by a GPC method (gel permeation chromatograph method) and converted using reference polystyrene. For example, an HLC-8220 GPC (Tosoh Corporation) is used as the GPC, with three columns, that is, TSKgeL SuperHZM-H, TSKgeL SuperHZ4000, and TSKgeL SuperHZ2000 (Tosoh Corporation, 4.6 mm ID x 15 cm) as columns, and THF (tetrahydrofuran) as eluent. The conditions are such that the sample concentration is 0.35 mass%, the flow rate is 0.35 mL/min, the amount of sample injected is 10 $\mu$L, the measurement temperature is 40°C, and an IR detector is used. Furthermore, a calibration curve is generated from eight samples of 'reference sample TSK standard, polystyrene', that is, 'F-40', 'F-20', 'F-4', 'F-1', 'A-5000', 'A-2500', 'A-1000', and 'n-propylbenzene' manufactured by Tosoh Corporation.

With regard to Component A, one type may be used on its own or two or more types may be used in combination. However, Component A always comprises the urethane oligomer having a polymerizable group and a partial structure represented by formula a-1.

In particular, Component A preferably comprises in combination a monofunctional polymerizable compound and a polyfunctional polymerizable compound, and more preferably comprises in combination a monofunctional ethylenically unsaturated compound and a polyfunctional ethylenically unsaturated compound.

The content of Component A in the radiation-curable ink composition of the present invention is preferably 30 to 95 mass% relative to the total mass of the ink composition, more preferably 40 to 90 mass%, and yet more preferably 50 to 85 mass%. When the content is within this range, the curability and inkjet discharge properties are excellent.

<Monofunctional polymerizable compound>

The radiation-curable ink composition of the present invention preferably comprises as Component A a monofunctional polymerizable compound.

From the viewpoint of stretchability of a cured film that is obtained, the radiation-curable ink composition of the present invention preferably comprises a monofunctional polymerizable compound in an amount of at least 80 parts by mass relative to a content of 100 parts by mass of Component A in the ink composition, more preferably at least 85 parts by mass, and yet more preferably at least 90 parts by mass but no greater than 99 parts by mass.

The monofunctional polymerizable compound is preferably a monofunctional radically polymerizable compound, and more preferably a monofunctional ethylenically unsaturated compound.

Preferred examples of the monofunctional ethylenically unsaturated compound include a monofunctional *N*-vinyl compound and a monofunctional (meth)acrylate compound.

Component A preferably comprises at least both a monofunctional N-vinyl compound and a monofunctional (meth)acrylate compound. With the above embodiment, a cured film that is obtained has better blocking resistance and excellent crack suppression properties during hole making.

-*N*-vinyl compound-

From the viewpoint of blocking resistance of a cured film that is obtained and crack suppression properties during hole making, Component A preferably includes an *N*-vinyl compound, and more preferably a monofunctional *N*-vinyl compound.

The *N*-vinyl compound is preferably an *N*-vinyllactam, more preferably *N*-vinylcaprolactam or 1-vinyl-2-pyrrolidone, and particularly preferably N-vinylcaprolactam. *N*-vinylcaprolactam is preferable since it has excellent safety, is widely used and available at relatively low cost, and can give particularly good ink curability and adhesion of a cured film to a recording medium.

The content of the *N*-vinyl compound in the ink composition is preferably 5 to 60 mass% relative to the mass of the entire ink composition, more preferably 10 to 40 mass%, and yet more preferably 15 to 35 mass%. When the content is at least 5 mass%, adhesion to a recording medium is excellent, and when the content is no greater than 60 mass%, storage stability is excellent.

-Monofunctional (meth)acrylate compound-

From the viewpoint of stretchability of a cured film that is obtained, Component A more preferably includes a monofunctional (meth)acrylate compound.

Specific examples of the monofunctional (meth)acrylate include ethoxyethoxyethyl (meth)acrylate, *t*-butylcyclohexyl (meth)acrylate, phenoxyethyl (meth)acrylate, cyclohexyl (meth)acrylate, 3,3,5-trimethylcyclohexyl (meth)acrylate, tetrahydrofurfuryl (meth)acrylate, isobornyl (meth)acrylate, an alkyl (meth)acrylate having 4 to 12 carbons, isoamyl (meth)acrylate, stearyl (meth)acrylate, lauryl (meth)acrylate, isomyristyl (meth)acrylate, isostearyl (meth)acrylate, 2-ethylhexyldiglycol (meth)acrylate, 2-hydroxybutyl (meth)acrylate, butoxyethyl (meth)acrylate, methoxydiethylene glycol (meth)acrylate, methoxypolyethylene glycol (meth)acrylate, methoxypropylene glycol (meth)acrylate, 2-hydroxyethyl (meth)acrylate, 2-hydroxypropyl (meth)acrylate, 2-(meth)acryloyxyethylsuccinic acid, 2-(meth)acryloyxyethyl-2-hydroxyethylphthalic acid, a lactone-modified flexible (meth)acrylate, cyclopentenyl (meth)acrylate, cyclopentenyloxyethyl (meth)acrylate, dicyclopentanyl (meth)acrylate, time cyclopentanyloxyethyl (meth)acrylate, benzyl (meth)acrylate, cyclic trimethylolpropane formal (meth)acrylate, (2-methyl-2-ethyl-1,3-dioxolane-4-yl)methyl (meth)acrylate, (3-ethyloxetane-3-yl)methyl (meth)acrylate, and (2,2-cyclohexyl-1,3-dioxolane-4-yl)methyl (meth)acrylate.

Among them, from the viewpoint of stretchability and blocking resistance of a cured film that is obtained, Component A preferably includes t-butylcyclohexyl acrylate and/or isobornyl acrylate, and more preferably isobornyl acrylate.

From the viewpoint of the inkjet discharge properties and blocking resistance of a cured film that is obtained, Component A preferably comprises a monofunctional (meth)acrylate compound having an aliphatic hydrocarbon ring, and more preferably comprises a monofunctional (meth)acrylate compound having an aliphatic hydrocarbon ring and a monofunctional (meth)acrylate compound having an aromatic ring.

Preferred examples of the monofunctional (meth)acrylate compound having an aliphatic hydrocarbon ring include *t*-butylcyclohexyl (meth)acrylate and isobornyl (meth)acrylate.

Preferred examples of the monofunctional (meth)acrylate compound having an aromatic ring include phenoxyethyl (meth)acrylate.

Furthermore, Component A preferably comprises, in combination with t-butylcyclohexyl acrylate and/or isobornyl acrylate, at least one monofunctional (meth)acrylate compound selected from the above group of monofunctional (meth)acrylate compounds, and particularly preferably comprises *t*-butylcyclohexyl acrylate and/or isobornyl acrylate, and phenoxyethyl acrylate. It is preferable to use *t*-butylcyclohexyl acrylate and/or isobornyl acrylate in combination with phenoxyethyl acrylate since the curability is excellent and a cured image having excellent substrate adhesion and stretchability is obtained.

When the ink composition of the present invention comprises t-butylcyclohexyl acrylate and/or isobornyl acrylate, and phenoxyethyl acrylate, it is preferable that WA:WB = 1:9 to 9:1 where WA (mass%) is the total content of *t*-butylcyclohexyl acrylate and isobornyl acrylate in the ink composition and WB (mass%) is the total content of the monofunctional (meth)acrylate compound selected from the above group; it is more preferably 2:8 to 8:2, and it is yet more preferably 3:7 to 7:3. When WA:WB is within this range, an image having excellent stretchability and excellent punching suitability is obtained.

It is preferable for phenoxyethyl acrylate to be contained at 0 to 50 mass% of the entire ink composition, more preferably 5 to 40 mass%, and yet more preferably 10 to 30 mass%.

The content of the monofunctional polymerizable compound in the radiation-curable ink composition of the present invention is preferably 10 to 90 mass% of the entire ink composition, more preferably 20 to 88 mass%, and yet more preferably 30 to 85 mass%. When the content is within this range, the stretchability is better, and the punching suitability is excellent.

<Polyfunctional polymerizable compound>

Component A includes the urethane oligomer having a polymerizable group and a partial structure represented by formula a-1, and may include further polyfunctional polymerizable compounds, and preferably a polyfunctional polymerizable oligomer.

The polyfunctional polymerizable compound is preferably a polyfunctional radically polymerizable compound, and preferably has an ethylenically unsaturated group as a radically polymerizable group, and more preferably a (meth)acryloyl group.

That is, Component A preferably includes a polyfunctional (meth)acrylate compound, and more preferably a polyfunctional (meth)acrylate oligomer, and is particularly preferably a polyfunctional (meth)acrylate oligomer.

The polyfunctional polymerizable oligomer is preferably one having a (meth)acryloyl group as a polymerizable group.

The number of polymerizable groups contained in the polyfunctional polymerizable oligomer is preferably 2 to 15 per molecule from the viewpoint of achieving a balance between flexibility and curability, more preferably 2 to 6, yet more preferably 2 to 4, and particularly preferably 2.

Examples of the polyfunctional polymerizable oligomer in the present invention include polyurethane oligomer (meth)acrylate-based, polyester (meth)acrylate-based, olefin-based (ethylene oligomer, propylene oligomer butene oligomer, etc.), vinyl-based (styrene oligomer, vinyl alcohol oligomer, vinylpyrrolidone oligomer, (meth)acrylate oligomer, etc.), diene-based (butadiene oligomer, chloroprene rubber, pentadiene oligomer, etc.), ring-opening polymerization (di-, tri-, tetra-ethylene glycol, polyethylene glycol, polyethylimine, etc.), polyaddition (oligoester (meth)acrylate, polyamide oligomer, polyisocyanate oligomer), addition-condensation oligomer (phenolic resin, amino resin, xylene resin, ketone resin, etc.), amine-modified polyester oligomer, and silicone-based (silicone (meth)acrylate oligomer). Among them, a silicone-based oligomer is preferable, and a silicone-based (meth)acrylate oligomer is particularly preferable.

With regard to the polyfunctional polymerizable oligomers, one type may be used on its own or a plurality thereof may be used in combination.

Examples thereof include a polyethylene glycol di(meth)acrylate whose molecular weights are within the oligomer region, a polyurethane oligomer, and a polyester oligomer.

The polyurethane oligomer is preferably a polyurethane (meth)acrylate oligomer, and examples include an aliphatic polyurethane (meth)acrylate and an aromatic polyurethane (meth)acrylate. Details may be referred to in the Oligomer Handbook (Ed by Junji Furukawa, The Chemical Daily Co., Ltd.).

Examples of the polyurethane (meth)acrylate oligomer include U-2PPA, U-4HA, U-6HA, U-6LPA, U-15HA, U-324A, UA-122P, UA5201, and UA-512 manufactured by Shin-Nakamura Chemical Co., Ltd.; CN964A85, CN964, CN959, CN962, CN963J85, CN965, CN982B88, CN981, CN983, CN996, CN9002, CN9007, CN9009, CN9010, CN9011, CN9178, CN9788, and CN9893 manufactured by Sartomer Japan Inc.; and EB204, EB230, EB244, EB245, EB270, EB284, EB285, EB810, EB4830, EB4835, EB4858, EB1290, EB210, EB215, EB4827, EB4830, EB4849, EB6700, EB204, EB8402, EB8804, and EB8800-20R manufactured by Daicel-Cytec Company Ltd.

The polyester oligomer is preferably an amine-modified polyester oligomer, and examples include EB524, EB80, and EB81 manufactured by Daicel-Cytec Company Ltd., CN550, CN501, and CN551 manufactured by Sartomer Japan Inc., and GENOMER 5275 manufactured by Rahn A.G.

Among them, the polyfunctional polymerizable oligomer is a urethane oligomer having a polymerizable group, and more preferably a urethane (meth)acrylate oligomer.

The urethane oligomer that has a polymerizable group is preferably one having an isophorone skeleton, is also preferably one having a polyester skeleton, and is more preferably one having an isophorone skeleton and a polyester skeleton.

According to this invention, Component A comprises a urethane oligomer that has a polymerizable group and

has a partial structure represented by Formula a-1 below.

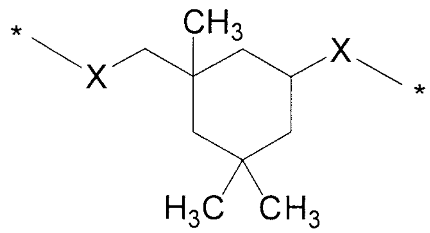

( a - 1 )

In Formula a-1, the Xs independently denote a urethane bond, an ester bond, an ethyleneoxy (EO) group, a propyleneoxy (PO) group, or an alkylene group, and * denotes the position of bonding.

In Formula a-1, X denotes a urethane bond (-NH-CO-), an ester bond (-CO-O-), an ethyleneoxy (EO) group, a propyleneoxy (PO) group, or an alkylene group. The alkylene group preferably has 1 to 12 carbons, more preferably has 1 to 8 carbons, yet more preferably has 1 to 6 carbons, and particularly preferably has 1 to 4 carbons.

Among them, X is preferably a urethane bond. That is, the urethane oligomer that has a polymerizable group preferably has a partial structure comprising an isophorone structure and a urethane bond represented by Formula a-1'.

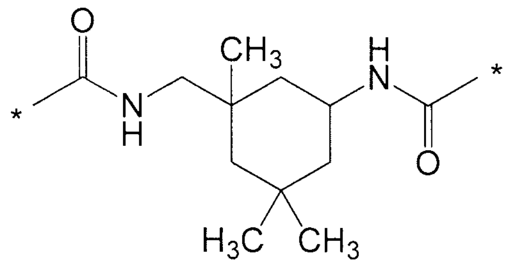

( a - 1' )

In Formula a-1', * denotes the position of bonding.

The urethane oligomer that has a polymerizable group is preferably a straight-chain difunctional oligomer.

The monomer unit having an isophorone structure in the urethane oligomer that has a polymerizable group and an isophorone structure is preferably 1 to 30 mol% relative to the total monomer units forming the oligomer, more preferably 2 to 28 mol%, and yet more preferably 3 to 25 mol%.

From the viewpoint of achieving a balance between curability and adhesion, the content of the polyfunctional polymerizable compound is preferably 0.1 to 15 mass% relative to the total mass of the ink composition, more preferably 0.2 to 10 mass%, and yet more preferably 0.3 to 5 mass%.

From the viewpoint of achieving a balance between curability and adhesion, the content of the polyfunctional polymerizable oligomer is preferably 0.1 to 10 mass% relative to the total mass of the ink composition, more preferably 0.2 to 8 mass%, and yet more preferably 0.3 to 5 mass%.

(Component B) Photopolymerization initiator

The radiation-curable ink composition of the present invention comprises a photopolymerization initiator as Component B.

The photopolymerization initiator in the present invention includes a compound that generates a polymerization-initiating species by irradiation of actinic radiation, and may be used by appropriate selection from known polymerization initiators.

The photopolymerization initiator in the present invention includes not only a compound that generates a polymerization-initiating species by irradiation actinic radiation but also a compound that promotes decomposition of a polymerization initiator by absorbing specific actinic radiation (a so-called sensitizer).

Examples of Component B include a radical photopolymerization initiator and a cation photopolymerization initiator (a photo-acid generator).

<Radical photopolymerization initiator>

Component B is preferably a radical photopolymerization initiator, examples of the radical photopolymerization initiator include (a) an aromatic ketone, (b) an acylphosphine compound, (c) an aromatic onium salt compound, (d) an

organic peroxide, (e) a thio compound, (f) a hexaarylbiimidazole compound, (g) a ketoxime ester compound, (h) a borate compound, (i) an azinium compound, (j) a metallocene compound, (k) an active ester compound, (l) a compound having a carbon-halogen bond, and (m) an alkylamine compound.

With regard to these radical photopolymerization initiators, the above-mentioned compounds (a) to (m) may be used singly or in combination. The radical polymerization initiator in the present invention may suitably be used singly or in a combination of two or more types.

Among them, the aromatic ketone (a), the acylphosphine compound (b), and the thio compound (e) are preferable. Preferred examples of them include a compound having a benzophenone skeleton (benzophenone compound) or a compound having a thioxanthone skeleton (thioxanthone compound) described in 'RADIATION CURING IN POLYMER SCIENCE AND TECHNOLOGY' J. P. FOUASSIER J. F. RABEK (1993), pp. 77 to 117. Preferred include an α-thiobenzophenone compound described in JP-B-47-6416, a benzoin ether compound described in JP-B-47-3981, an α-substituted benzoin compound described in JP-B-47-22326, a benzoin derivative described in JP-B-47-23664, an aroylphosphonic acid ester described in JP-A-57-30704, a dialkoxybenzophenone described in JP-B-60-26483, benzoin ethers described in JP-B-60-26403 and JP-A-62-81345, α-aminobenzophenones described in JP-B-1-34242, US Pat. No. 4,318,791, and EP No. 0284561A1, p-di(dimethylaminobenzoyl)benzene described in JP-A-2-211452, a thio-substituted aromatic ketone described in JP-A-61-194062, an acylphosphine sulfide described in JP-B-2-9597, an acylphosphine described in JP-B-2-9596, a thioxanthone described in JP-B-63-61950, and a coumarin described in JP-B-59-42864.

In the present invention, the acylphosphine compound is preferably used as the photopolymerization initiator, the acylphosphine oxide compound is more preferably used as the photopolymerization initiator, and a bisacylphosphine oxide compound and a monoacylphosphine oxide compound are yet more preferably used in combination.

Preferred examples of the acylphosphine compound include bis(2,4,6-trimethylbenzoyl)phenylphosphine oxide, bis(2,6-dimethoxybenzoyl)-2,4,4-trimethylpentylphenylphosphine oxide, and 2,4,6-trimethylbenzoyldiphenylphosphine oxide.

Examples of the sensitizer include a polynuclear aromatic compound (e.g. pyrene, perylene, triphenylene), a xanthene (e.g. fluorescein, eosin, erythrosine, rhodamine B, Rose Bengal), a cyanine (e.g. thiacarbocyanine, oxacarbocyanine), a merocyanine (e.g. merocyanine, carbomerocyanine), a thiazine (e.g. thionine, methylene blue, toluidine blue), an acridine (e.g. acridine orange, chloroflavin, acriflavine), an anthraquinone (e.g. anthraquinone), a squarium (e.g. squarium), a coumarin (e.g. 7-diethylamino-4-methylcoumarin), and a thioxanthone (e.g. thioxanthone, 2-isopropylthioxanthone, 4-isopropylthioxanthone).

Among them, the ink composition of the present invention preferably comprises a thioxanthone compound as Component B.

With regard to the sensitizer, one type may be used on its own or two or more types may be used in combination.

With regard to the photopolymerization initiator, one type may be used on its own or two or more types may be used in combination.

The photopolymerization initiator preferably comprises at least two photopolymerization initiator selected from the group consisting of an α-hydroxyketone compound, an α-aminoketone compound, a bisacylphosphine oxide compound, a monoacylphosphine oxide compound, and a thioxanthone compound, more preferably comprises a bisacylphosphine oxide compound and/or a monoacylphosphine oxide compound, and a thioxanthone compound, and yet more preferably comprises a bisacylphosphine oxide compound, a monoacylphosphine oxide compound, and a thioxanthone compound.

The content of the photopolymerization initiator is preferably 1 to 50 mass% relative to the total mass of the ink composition, more preferably 2 to 40 mass%, yet more preferably 5 to 20 mass%, and particularly preferably 8 to 15 mass%.

(Component C) Two or more types of surfactants

The radiation-curable ink composition of the present invention comprises two or more types of surfactants as Component C, Component C comprising at least a surfactant that has a polymerizable group and a surfactant that does not have a polymerizable group, the mass ratio of a content $C^1$ of the surfactant that has a polymerizable group and a content $C^2$ of the surfactant that does not have a polymerizable group being $C^1$:$C^2$ = 35:1 to 1:10.

The surfactant in the present invention means a compound having an oleophilic moiety, which is compatible with oil, and a hydrophilic moiety, which is compatible with water.

Component C may comprise at least one type of surfactant that has a polymerizable group and at least one type of surfactant that does not have a polymerizable group.

With regard to the surfactant that has a polymerizable group, one type may be contained on its own or two or more types may be contained. The same applies to the surfactant that does not have a polymerizable group.

The polymerizable group in the surfactant that has a polymerizable group may be either a cationically polymerizable group or a radically polymerizable group; examples of the cationically polymerizable group include an epoxy group, an oxetanyl group, and a vinyl ether group, and examples of the radically polymerizable group include an ethylenically unsaturated group (ethylenically unsaturated bond).

The polymerizable group in the surfactant that has a polymerizable group is preferably an ethylenically unsaturated group, and more preferably a (meth)acryloxy group.

Examples of the surfactant used in the present invention include the surfactants below.

For example, those described in JP-A-62-173463 and JP-A-62-183457 can be cited. Specific examples include an anionic surfactant such as a dialkylsulfosuccinate, an alkylnaphthalenesulfonate, or a fatty acid salt, a nonionic surfactant such as a polyoxyethylene alkyl ether, a polyoxyethylene alkyl allyl ether, an acetylene glycol, or a polyoxyethylene/polyoxypropylene block copolymer, and a cationic surfactant such as an alkylamine salt or a quaternary ammonium salt. As the known surfactants, an organofluorine compound may be used. The organofluorine compound is preferably hydrophobic. Examples of the organofluorine compound include a fluorine-based surfactant, an oily fluorine-based compound (e.g. a fluorine oil), a solid fluorine compound resin (e.g. a tetrafluoroethylene resin), and those described in JP-B-57-9053 (JP-B denotes a Japanese examined patent application publication) (paragraphs 8 to 17) and JP-A-62-135826.

The surfactant is preferably a compound having a silicone chain, that is, a silicone-based surfactant, and/or a compound having a perfluoroalkyl chain, that is, a fluorine-based surfactant.

The total content of surfactant in the ink composition (the total content of Component C) is not particularly limited, but from the viewpoint of stable discharge properties and a desired range of surface tension it is preferably at least 0.03 mass% but less than 15 mass% of the entire ink, more preferably at least 0.03 mass% but less than 10 mass%, yet more preferably 0.1 to 8 mass%, and particularly preferably 0.2 to 5 mass%.

As the surfactant that does not have a polymerizable group, the silicone-based surfactant and/or the fluorine-based surfactant are preferable and the silicone-based surfactant is more preferable.

Examples of the silicone-based surfactant or the fluorine-based surfactant that does not have a polymerizable group include BYK306, 307, 310, 313, 320, 331, 333, 350, 377, 378 manufactured UCB Chemicals, KF series and X-22 series, X-21 series manufactured by Shin-Etsu Chemical Co., Ltd. which are silicones substituted by organic groups at both terminals, silicones substituted by an organic group at one terminal, silicones substituted by organic groups at both terminals of the side chains, or silicones substituted by organic groups at the side chains and Megaface F series manufactured by DIC Corporation.

As the surfactant that has a polymerizable group, the silicone-based surfactant and/or the fluorine-based surfactant are preferable and the silicone-based surfactant is more preferable.

As a surfactant that has a polymerizable group, the silicone-based surfactant that has a polymerizable group and/or the fluorine-based surfactant that has a polymerizable group are preferable.

As the silicone oligomer that has a polymerizable group, the commercial materials below can be exemplified.

Ebecryl 350 and Ebecryl 4842 (both manufactured by UCB Chemicals Corp.), PERENOL S-5 (manufactured by Cognis), RC149, RC300, RC450, RC709, RC710, RC711, RC720, and RC802 (all manufactured by Goldschmidt Chemical Corporation), FM0711, FM0721, FM0725, and PS583 (all manufactured by Chisso Corporation), KP-600, X-22-164, X-22-164AS, X-22-164A, X-22-164B, X-22-164C, and X-22-164E (all manufactured by Shin-Etsu Chemical Co., Ltd.), BYK UV3500, BYK UV3505, BYK UV3510, BYK UV3530, BYK UV3550, BYK UV3570 and BYK Silclean 3700 (all manufactured by BYK Chemie), TEGO Rad 2010, TEGO Rad 2011, TEGO Rad 2100, TEGO Rad 2200N, TEGO Rad 2250N, TEGO Rad 2300, TEGO Rad 2500, TEGO Rad 2600, and TEGO Rad 2700 (all manufactured by Degussa), and DMS-V00, DMS-V03, DMS-V05, DMS-V21, DMS-V22, DMS-V25, DMS-V25R, DMS-V31, DMS-V33, DMS-V35, DMS-V41, DMS-V42, DMS-V46, DMS-V52, DMS-V25R, DMS-V35R, PDV-0325, PDV 0331, PDV 0341, PDV 0346, PDV 0525, PDV 0541, PDV 1625, PDV 1631, PDV 1635, PDV 1641, PDV 2331, PDV 2335, PMV-9925, PVV-3522, FMV-4031, EDV-2025, VDT-123, VDT-127, VDT-131, VDT-153, VDT-431, VDT-731, VDT-954, VDS-2513, VDV-0131, VGM-021, VGP-061, VGF-991, VQM-135, VQM-146, VQX-221, VMS-005, VMS-T11, VTT-106, MTV-124, VAT-4326, VBT-1323, VPT-1323, VMM-010, VEE-005, and VPE-005 (all manufactured by Gelest, Inc.)

As the fluorine oligomer that has a polymerizable group, the commercial materials below can be exemplified.

Megaface RS72, Megaface RS75, Megaface RS76, Megaface RS77, Megaface RS90 (all manufactured by DIC Corporation)

In addition, the weight-average molecular weight of the silicone-based surfactant is preferably 500 to 30,000, and more preferably 750 to 25,000 and yet more preferably 1,000 to 20,000.

Moreover, the silicone-based surfactant has preferably a polyether chain in a side chain, a terminal or a main chain of the polysiloxane structure.

In the ink composition of the present invention, a surfactant that does not have a polymerizable group preferably has higher surface-tension lowering ability than a surfactant that has a polymerizable group. The higher surface-tension lowering ability of the surfactant that does not have a polymerizable group presumably makes higher existence of the surfactant that does not have a polymerizable group than the surfactant that has a polymerizable group, therefore

provides excellent leaving properties from a mold, and suppresses more efficiently sticking to a mold in in-mold molding step.

In the present invention, the surface-tension lowering ability of a surfactant is evaluated the surface tension measured by the method below.

An ink composition having a composition below for measuring a surface tension was prepared and the surface tension of the ink (hereinafter also called as "specific surface tension") was measured. Here, the surface tension above is a value measured at 25°C by the Wilhelmy method using a general surface tensiometer (e.g. a CBVP-Z surface tensiometer manufactured by Kyowa Interface Science Co., Ltd., etc.).

A plate for the measurement is made of platinum.

The surface tension was 33.5 mN/m when 0.5 parts by mass of the surfactant in the ink composition for the measurement of surface tension was replaced by 0.5 mass part of phenoxyethyl acrylate.

-Ink composition for surface tension measurement-

Surfactant for measurement: 0.5 parts by mass
White mill base below: 30 parts by mass
N-Vinylcaprolactam: 24 parts by mass
Isobornyl acrylate: 20 parts by mass
Phenoxyethyl acrylate: 11 parts by mass
BR113 (acrylic resin, Mitsubishi Rayon Co., Ltd.): 1 part by mass 2,4,6-Trimethylbenzoyldiphenylphosphine oxide: 5 parts by mass Bis(2,4,6-trimethylbenzoyl)phenylphosphine oxide: 5 parts by mass Isopropylthioxanthone: 1 part by mass BYK JET9151 (pigment dispersing agent, BYK Chemie): 1 part by mass CN996 (urethane acrylate oligomer, Sartomer): 1 part by mass 4-Hydroxy-2,2,6,6-tetramethylpiperidine 1-oxyl: 0.3 parts by mass
UV-12 (tris(*N*-nitroso-*N*-phenylhydroxyamine) aluminum salt, Kroma Chem): 0.2 parts by mass

-Formulation of white mill base-

White pigment: KRONOS 2300 (KRONOS): 45 parts by mass
Phenoxyethyl acrylate: 50 parts by mass
Solsperse 41000 (The Lubrizol Corporation): 5 parts by mass

It can be said that a surfactant having a lower value of surface tension (specific surface tension) measured by the above method has a higher ability to reduce surface tension.

The specific surface tension of the surfactant that has a polymerizable group is preferably greater than 18 mN/m but no greater than 32 mN/m, more preferably greater than 23 mN/m but no greater than 32 mN/m, and yet more preferably greater than 23 mN/m but no greater than 28 mN/m. When in this range, it is possible to prevent sticking to a mold during molding.

The specific surface tension of the surfactant that does not have a polymerizable group is preferably greater than 18 mN/m but no greater than 32 mN/m, more preferably greater than 18 mN/m but no greater than 28 mN/m, and yet more preferably greater than 18 mN/m but no greater than 23 mN/m. When in this range, it is possible to prevent sticking to a mold during molding.

The content of the surfactant that has a polymerizable group in the ink composition of the present invention is preferably at least 0.03 mass% but less than 10 mass% relative to the total mass of the ink composition, more preferably 0.1 to 5 mass%, and yet more preferably 0.5 to 2 mass%.

From the viewpoint of inkjet discharge properties, the amount added of the surfactant that does not have a polymerizable group in the ink composition of the present invention is preferably at least 0.03 mass% but less than 10 mass% relative to the total mass of the ink composition, more preferably 0.05 to 5 mass%, and yet more preferably 0.2 to 0.5 mass%.

The mass ratio of the content $C^1$ of the surfactant that has a polymerizable group in the ink composition of the present invention and the content $C^2$ of the surfactant that does not have a polymerizable group is $C^1$:$C^2$ = 35:1 to 1:10, preferably 20:1 to 3:10, and more preferably 10:1 to 1:1. When in this range, the inkjet discharge properties are excellent, and a cured film is excellent in terms of stretchability, blocking resistance, and mold sticking-prevention properties during molding.

(Component D) Colorant

The ink composition of the present invention may comprise a colorant as Component D, in order to improve the visibility of a formed image area.

The colorant is not particularly limited, but a pigment and an oil-soluble dye that have excellent weather resistance and rich color reproduction are preferable, and it may be selected from any known coloring agent such as a soluble dye. It is preferable that the colorant does not function as a polymerization inhibitor in a polymerization reaction, which is a curing reaction. This is because the sensitivity of the curing reaction by actinic radiation should not be degraded.

The colorant is preferably a white colorant, more preferably a white pigment, and yet more preferably a titanium oxide.

The ink composition of the present invention is preferably a white ink composition or a clear ink composition, and more preferably a white ink composition.

The pigment that can be used in the present invention is not particularly limited and, for example, organic and inorganic pigments having the numbers below described in the Color Index may be used.

That is, as a red or magenta pigment, Pigment Red 3, 5, 19, 22, 31, 38, 42, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, or 257, Pigment Violet 3, 19, 23, 29, 30, 37, 50, or 88, and Pigment Orange 13, 16, 20, or 36; as a blue or cyan pigment, Pigment Blue 1, 15, 15:1, 15:2, 15:3, 15:4, 15:6, 16, 17-1, 22, 27, 28, 29, 36, or 60; as a green pigment, Pigment Green 7, 26, 36, or 50; as a yellow pigment, Pigment Yellow 1, 3, 12, 13, 14, 17, 34, 35, 37, 55, 74, 81, 83, 93, 94, 95, 97, 108, 109, 110, 120, 137, 138, 139, 153, 154, 155, 157, 166, 167, 168, 180, 185, or 193; as a black pigment, Pigment Black 7, 28, or 26; as a white pigment, Pigment White 6, 18, or 21, etc. may be used according to the intended application.

In the present invention, a disperse dye may be used in a range that enables it to be dissolved in a water-immiscible organic solvent. Disperse dyes generally include water-soluble dyes, but in the present invention it is preferable for the disperse dye to be used in a range such that it dissolves in a water-immiscible organic solvent.

Specific preferred examples of the disperse dye include CI Disperse Yellow 5, 42, 54, 64, 79, 82, 83, 93, 99, 100, 119, 122, 124, 126, 160, 184:1, 186, 198, 199, 201, 204, 224, and 237; CI Disperse Orange 13, 29, 31:1, 33, 49, 54, 55, 66, 73, 118, 119, and 163; CI Disperse Red 54, 60, 72, 73, 86, 88, 91, 92, 93, 111, 126, 127, 134, 135, 143, 145, 152, 153, 154, 159, 164, 167:1, 177, 181, 204, 206, 207, 221, 239, 240, 258, 277, 278, 283, 311, 323, 343, 348, 356, and 362; CI Disperse Violet 33; CI Disperse Blue 56, 60, 73, 87, 113, 128, 143, 148, 154, 158, 165, 165:1, 165:2, 176, 183, 185, 197, 198, 201, 214, 224, 225, 257, 266, 267, 287, 354, 358, 365, and 368; and CI Disperse Green 6:1 and 9

It is preferable that the colorant is added to the ink composition and then dispersed in the ink to an appropriate degree. For dispersion of the colorant, for example, a dispersing machine such as a ball mill, a sand mill, an attritor, a roll mill, an agitator, a Henschel mixer, a colloidal mill, an ultrasonic homogenizer, a pearl mill, a wet type jet mill, or a paint shaker may be used.

The colorant may be added directly to the ink composition, but in order to improve dispersibility it may be added in advance to a solvent or a dispersing medium such as a polymerizable compound used in the present invention.

In the present invention, in order to avoid the problem of the solvent resistance being degraded when the solvent remains in the cured image and the VOC (Volatile Organic Compound) problem of the residual solvent, it is preferable to add the colorant in advance to a dispersing medium such as a polymerizable compound. As a polymerizable compound used, it is preferable in terms of dispersion suitability to select a monomer having low viscosity. The colorants may be used by appropriately selecting one type or two or more types according to the intended purpose of the ink composition.

When a colorant such as a pigment that is present as a solid in the ink composition is used, it is preferable for the colorant, the dispersant, the dispersing medium, dispersion conditions, and filtration conditions to be set so that the average particle size of colorant particles is preferably 0.005 to 0.5 $\mu$m, more preferably 0.01 to 0.45 $\mu$m, and yet more preferably 0.015 to 0.4 $\mu$m. By such control of particle size, clogging of a head nozzle can be suppressed, and the ink storage stability, the transparency, and the curing sensitivity can be maintained.

The content of the colorant in the ink composition is appropriately selected according to the color and the intended purpose, and is preferably 0.01 to 30 mass% relative to the mass of the entire ink composition.

(Component E) Dispersant

The ink composition of the present invention preferably comprises a dispersant. Especially, when the pigment is used, the ink composition preferably comprises a dispersant in order to stably disperse the pigment in the ink composition. As the dispersant that can be used in the present invention, a polymeric dispersant is preferable. The 'polymeric dispersant' referred to in the present invention means a dispersant having a weight-average molecular weight of 1,000 or greater.

Examples of the polymeric dispersant include polymeric dispersants such as DISPERBYK-101, DISPERBYK-102, DISPERBYK-103, DISPERBYK-106, DISPERBYK-111, DISPERBYK-161, DISPERBYK-162, DISPERBYK-163, DISPERBYK-164, DISPERBYK-166, DISPERBYK-167, DISPERBYK-168, DISPERBYK-170, DISPERBYK-171, DISPERBYK-174, and DISPERBYK-182 (manufactured by BYK Chemie), EFKA4010, EFKA4046, EFKA4080, EFKA5010, EFKA5207, EFKA5244, EFKA6745, EFKA6750, EFKA7414, EFKA745, EFKA7462, EFKA7500, EFKA7570, EFKA7575, and EFKA7580 (manufactured by EFKA Additives), Disperse Aid 6, Disperse Aid 8, Disperse Aid 15, and Disperse Aid

9100 (manufactured by San Nopco Limited); various types of SOLSPERSE dispersants such as Solsperse 3000, 5000, 9000, 12000, 13240, 13940, 17000, 22000, 24000, 26000, 28000, 32000, 36000, 39000, 41000, and 71000 (manufactured by Noveon); Adeka Pluronic L31, F38, L42, L44, L61, L64, F68, L72, P95, F77, P84, F87, P94, L101, P103, F108, L121, and P-123 (manufactured by Adeka Corporation), Ionet S-20 (manufactured by Sanyo Chemical Industries, Ltd.), and Disparlon KS-860, 873SN, and 874 (polymeric dispersant), #2150 (aliphatic poly carboxylic acid), and #7004 (polyether ester type) (manufactured by Kusumoto Chemicals, Ltd.).

The content of the dispersant in the ink composition of the present invention is appropriately selected according to the intended purpose, and is preferably 0.05 to 15 mass% relative to the mass of the entire ink composition.

(Component F) Inert methyl methacrylate homopolymer and/or copolymer

The ink composition of the present invention preferably comprises an inert methyl methacrylate homopolymer and/or copolymer as Component F.

The 'inert methyl methacrylate homopolymer and/or copolymer' referred to in the ink composition of the present invention means a methyl methacrylate homopolymer and/or copolymer that does not have a polymerizable functional group that can undergo a further chain polymerization reaction and that does not have a crosslinkable and/or crosslinking functional group that can undergo a further sequential crosslinking reaction. That is, it means a methyl methacrylate homopolymer and/or copolymer in a state that causes substantially no polymerization reaction or crosslinking reaction.

Furthermore, in the ink composition of the present invention, the inert methyl methacrylate homopolymer and/or copolymer are preferably dissolved in or miscible with Component A, etc. contained in the ink composition of the present invention.

The inert methyl methacrylate homopolymer is not particularly limited, and preferred examples thereof include a homopolymer of methyl methacrylate formed by a known polymerization method and one that is available as a commercial homopolymer product.

Furthermore, the inert methyl methacrylate copolymer is not particularly limited, and preferred examples thereof include a copolymer formed by a known polymerization reaction from methyl methacrylate and another polymerizable compound and one that is available as a commercial copolymer product. The copolymer may be any of a random copolymer, a block copolymer, and a graft copolymer. Preferred examples of the other polymerizable compound that is used for copolymerization include a (meth)acrylate compound. It is more preferably a methacrylate compound.

Component F may be used singly or in a combination of two or more types.

The content of Component F is preferably 0.3 to 5.0 mass% relative to the total mass of the ink composition, and more preferably 0.5 to 4.0 mass%. When in this range, the ink composition having better discharge stability, blocking resistance, and curability is obtained.

The weight-average molecular weight of Component F is preferably at least 4,000 but less than 120,000, more preferably 8,000 to 80,000, yet more preferably 10,000 to 70,000, particularly preferably 10,000 to 60,000, and the most preferably 20,000 to 50,000. When the weight-average molecular weight of Component C is in this range, sufficient discharge stability of the ink composition cannot be obtained and the occurrence of stripe unevenness of an image cannot be suppressed.

A copolymer of methyl methacrylate with another polymerizable compound can preferably be used as component F, other than a methyl methacrylate homopolymer. The other polymerizable compound is not particularly limited as long as the copolymer after polymerization is inert, but a (meth)acrylate compound other than methyl methacrylate is preferable, and a methacrylate compound other than methyl methacrylate is more preferable.

Preferred examples of monomers for copolymerization other than methyl methacrylate include ethyl (meth)acrylate, *n*-propyl (meth)acrylate, *i*-propyl (meth)acrylate, *n*-butyl (meth)acrylate, *i*-butyl (meth)acrylate, s-butyl (meth)acrylate, *t*-butyl (meth)acrylate, *n*-pentyl (meth)acrylate, *i*-pentyl (meth)acrylate, *t*-pentyl (meth)acrylate, neopentyl (meth)acrylate, 1-naphthyl (meth)acrylate, 2-naphthyl (meth)acrylate, 2-α-naphthoxyethyl (meth)acrylate, 2-β-naphthoxyethyl (meth)acrylate, 2-anthryl (meth)acrylate, 9-anthryl (meth)acrylate, 1-phenanthryl (meth)acrylate, 2-phenanthryl (meth)acrylate, an ethylene oxide-modified cresol (meth)acrylate, *p*-nonylphenoxyethyl (meth)acrylate, *p*-nonylphenoxy polyethylene glycol (meth)acrylate, *p*-cumylphenoxyethylene glycol (meth)acrylate, 2-furyl (meth)acrylate, 2-furfuryl (meth)acrylate, 2-thienyl (meth)acrylate, 2-thenyl (meth)acrylate, 1-pyrrolyl (meth)acrylate, 2-pyridyl (meth)acrylate, 2-quinolyl (meth)acrylate, norbornyl (meth)acrylate, isobornyl (meth)acrylate, cyclohexyl (meth)acrylate, cyclopentyl (meth)acrylate, cycloheptyl (meth)acrylate, cyclooctyl (meth)acrylate, cyclodecyl (meth)acrylate, dicyclodecyl (meth)acrylate, 3,3,5-trimethylcyclohexyl (meth)acrylate, 4-*t*-butylcyclohexyl (meth)acrylate, acryloylmorpholine, *N*-phthalimidoethyl (meth)acrylate, pentamethyl piperidyl (meth)acrylate, tetramethylpiperidyl (meth)acrylate, 5-(meth)acryloyloxymethyl-5-ethyl-1,3-dioxacyclohexane, 2-ethylhexyl (meth)acrylate, butoxyethyl (meth)acrylate, carbitol (meth)acrylate, *n*-butyl (meth)acrylate, dimethylaminomethyl (meth)acrylate, and an oligoester (meth)acrylate. Among these, n-butyl (meth)acrylate is preferable, and *n*-butyl methacrylate is particularly preferable.

The proportion of a repeating unit derived methyl methacrylate-in the methyl methacrylate copolymer used in

the ink composition of the present invention is preferably 10.0 to 90.0 mass% as a ratio by mass of the copolymer, and more preferably 30.0 to 85.0 mass%.

When in the above-mentioned range, the solubility and/or miscibility of the methyl methacrylate copolymer with a polymerizable compound used in the present invention improve, and it is possible to prevent the discharge stability of the ink composition of the present invention from degrading due to precipitation, etc. Furthermore, the ink composition of the present invention can give a cured image film having high blocking resistance and high surface scratch resistance due to the methyl methacrylate moiety of the copolymer having a rigid structure.

Of the inert methyl methacrylate homopolymer and/or copolymer used in the ink composition of the present invention, the homopolymer is preferable in terms of convenience since it is easy to select from homopolymers with various molecular weights, and the copolymer is preferable in terms of ease of changing the physical properties of the copolymer such as solubility or miscibility by selecting the type of other (meth)acrylate monomer.

The inert methyl methacrylate homopolymer and/or copolymer used in the present invention may be obtained by a method known in the art. It may be synthesized by a polymerization reaction of a corresponding (meth)acrylate monomer or may be obtained as a commercial product.

Examples of commercial products of the inert methyl methacrylate homopolymer and/or copolymer that can be used in the present invention include Aldrich's polymethyl methacrylate (molecular weight 10,000, catalog No. 81497; molecular weight 20,000, catalog No. 81498; molecular weight 50,000, catalog No. 81501), and methyl methacrylate/n-butyl methacrylate copolymer (ratio by weight 85/15, molecular weight 75,000; catalog No. 474029); Lucite Intenational's ELVACITE 2013 (methyl methacrylate/n-butyl methacrylate copolymer, ratio by weight 36/64, molecular weight 37,000), 2021, 2614, 4025, 4026, 4028, etc.; Rohm and Haas's PARALOID DM55, B66, etc.; and Dinal America's BR113, 115, etc.

<Other components>

The ink composition of the present invention may comprise as necessary, in addition to the above-mentioned components, a polymerization inhibitor, a UV absorber, an antioxidant, an antifading agent, a conductive salt, a solvent, a basic compound, etc. As these other components a known component may be used. Examples thereof include components described in JP-A-2009-221416.

Furthermore, from the viewpoint of storage properties and suppression of head clogging, the ink composition of the present invention preferably comprises a polymerization inhibitor.

The content of the polymerization inhibitor is preferably at 200 to 20,000 ppm relative to the total weight of the ink composition of the present invention.

Examples of the polymerization inhibitor include a nitroso-based polymerization inhibitor, a hindered amine-based polymerization inhibitor, hydroquinone, benzoquinone, *p*-methoxyphenol, TEMPO, TEMPOL, and Al cupferron.

<Ink physical properties>

The ink composition preferably has a viscosity at 25°C of no greater than 40 mPa•s while taking into consideration discharge properties. It is more preferably 5 to 40 mPa•s, and yet more preferably 7 to 30 mPa•s. Furthermore, the viscosity at the discharge temperature (preferably 25°C to 80°C, and more preferably 25°C to 50°C) is preferably 3 to 15 mPa•s, and more preferably 3 to 13 mPa•s. It is preferable to appropriately adjust the compositional ratio of the ink composition so that the viscosity is in the above range. It is preferable to set the viscosity at room temperature so as to be high since the ink can be prevented from penetrating into a recording medium even when a porous recording medium is used, thereby reducing uncured monomer. Furthermore, spreading of the ink when ink droplets have been fired and have landed can be suppressed, and as a result image quality is improved, which is preferable.

The surface tension at 25°C of the ink composition is preferably 18 to 40 mN/m, and more preferably 20 to 35 mN/m. When in this range, sticking to a mold can be suppressed.

Here, the surface tension may be measured at 25°C by the Wilhelmy method using a standard surface tensiometer (e.g. a CBVP-Z surface tensiometer manufactured by Kyowa Interface Science Co., Ltd.).

(Inkjet recording method, inkjet recording device, and printed material)

The inkjet recording method of the present invention is a method for forming an image by discharging the ink composition of the present invention onto a recording medium (support, recording material, etc.) for inkjet recording and curing the ink composition by irradiating the ink composition so discharged onto the recording medium with actinic radiation.

More specifically, the inkjet recording method of the present invention preferably comprises ($a^1$) a step of discharging the ink composition of the present invention onto a recording medium, and ($b^1$) a step of curing the ink composition by irradiating the discharged ink composition with actinic radiation.

Due to the inkjet recording method of the present invention comprising steps ($a^1$) and ($b^1$) above, an image is formed by the ink composition cured on the recording medium.

Furthermore, the inkjet recording method of the present invention is preferably carried out in a multipass mode in which the steps ($a^1$) and ($b^1$) are carried out two or more times in the same area above the recording medium, that is, printing is carried out by overlaying the same area. Due to the use of the ink composition of the present invention, when printing is carried out in a multipass mode, an image having excellent surface gloss is obtained.

Furthermore, the printed material of the present invention is a printed material recorded by the inkjet recording method of the present invention.

In the step ($a^1$) and a step (a), which is described later, in the inkjet recording method of the present invention, an inkjet recording device described in detail below may be used.

<Inkjet recording device>

The inkjet recording device used in the inkjet recording method of the present invention is not particularly limited, and any known inkjet recording device that can achieve an intended resolution may be used. That is, any known inkjet recording device, such as a commercial product, may be selected and used in order to discharge an ink composition onto the recording medium in the step ($a^1$) and the step (a) of the inkjet recording method of the present invention.

The inkjet recording device that can be used in the present invention is equipped with, for example, an ink supply system, a temperature sensor, and an actinic radiation source.

The ink supply system comprises, for example, a main tank containing the ink composition of the present invention, a supply pipe, an ink composition supply tank immediately before an inkjet head, a filter, and a piezo system inkjet head. The piezo system inkjet head may be driven so as to discharge a multisize dot of preferably 1 to 100 pL, and more preferably 8 to 30 pL, at a resolution of preferably 320 x 320 to 4,000 x 4,000 dpi (dots per inch), more preferably 400 x 400 to 1,600 x 1,600 dpi, and yet more preferably 720 x 720 dpi. Here, dpi referred to in the present invention means the number of dots per 2.54 cm.

As described above, since it is desirable for the inks of each color to be discharged at a constant temperature, the inkjet recording device is preferably equipped with a temperature stabilizer for stabilizing the temperature of the inks. Parts to be controlled to a constant temperature include all of the supply pipe system and the members from the ink tank (including an intermediate tank if it is provided) to the discharging face of the nozzle. A section from the ink supply tank to the inkjet head is thermally insulated and heated.

A method of controlling temperature is not particularly limited, but it is preferable to provide, for example, temperature sensors at a plurality of pipe section positions, and control heating according to the ink flow rate and the temperature of the surroundings. The temperature sensors may be provided on the ink composition supply tank and in the vicinity of the inkjet head nozzle. Furthermore, the head unit that is to be heated is preferably thermally shielded or insulated so that the device main body is not influenced by the temperature of the outside air. In order to reduce the printer start-up time required for heating, or in order to reduce the thermal energy loss, it is preferable to thermally insulate the head unit from other sections and also to reduce the heat capacity of the entire heated unit.

When the ink composition or the inkjet recording ink composition of the present invention is discharged using the above mentioned inkjet recording device, the ink composition is preferably discharged after being heated to preferably 25°C to 80°C, and more preferably 25°C to 50°C, so as to reduce the viscosity of the ink composition to preferably 3 to 15 mPa·s, and more preferably 3 to 13 mPa·s. In particular, it is preferable to use an ink composition having an ink viscosity at 25°C of no greater than 50 mP•s as the ink composition of the present invention since discharging can be carried out well. By employing this method, high discharge stability can be realized.

The radiation curing type ink composition such as the ink composition of the present invention generally has a viscosity that is higher than that of a normal ink composition or a water-based ink composition used for an inkjet recording ink composition, and variation in viscosity due to a change in temperature at the time of discharge is large. Viscosity variation in the ink composition has a large effect on changes in liquid droplet size and changes in liquid droplet discharge speed and, consequently, causes the image quality to be degraded. It is therefore necessary to maintain the ink composition discharge temperature as constant as possible. In the present invention, the control range for the temperature of ink composition is preferably ±5°C of a set temperature, more preferably ±2°C of the set temperature, and yet more preferably ±1°C of the set temperature.

Subsequently, the step ($b^1$) and a step (b), which is described later, are explained.

The ink composition discharged onto the recording medium cures upon exposure to actinic radiation. This is due to an initiating species such as a radical being generated by decomposition of the photopolymerization initiator contained in the ink composition of the present invention by irradiation with actinic radiation, the initiating species functioning so as to make a polymerization reaction of a polymerizable compound take place and to promote it. In this process, if a sensitizer is present together with the polymerization initiator in the ink composition, the sensitizer in the system absorbs actinic radiation, becomes excited, and promotes decomposition of the polymerization initiator by contact

with the polymerization initiator, thus enabling a curing reaction with higher sensitivity to be achieved.

The actinic radiation used in this process may include α rays, γ rays, an electron beam, X rays, UV rays, visible light, and IR rays. Although it depends on the absorption characteristics of the sensitizer, the peak wavelength of the actinic radiation is preferably 200 to 600 nm, more preferably 300 to 450 nm, yet more preferably 320 to 420 nm, and particularly preferably UV rays having a peak wave length of 340 to 400 nm.

Furthermore, in the present invention, the polymerization initiation system has sufficient sensitivity for low output actinic radiation. The actinic radiation for curing is applied therefore so that the illumination intensity on the exposed surface is preferably 10 to 4,000 mW/cm$^2$, and more preferably 20 to 2,500 mW/cm$^2$.

As an actinic radiation source, a mercury lamp, a gas/solid laser, etc. are mainly used, and for UV photocuring inkjet ink composition a mercury lamp and a metal halide lamp are widely known. However, from the viewpoint of protection of the environment, there has recently been a strong desire for mercury not to be used, and replacement by a GaN semiconductor UV light emitting device is very useful from industrial and environmental viewpoints. Furthermore, LEDs (UV-LED) and LDs (UV-LD) have small dimensions, long life, high efficiency, and low cost, and their use as a photocuring inkjet light source can be expected.

Furthermore, light-emitting diodes (LED) and laser diodes (LD) may be used as the source of actinic radiation. In particular, when a UV ray source is needed, a UV-LED or a UV-LD may be used. For example, Nichia Corporation has marketed a violet LED having a wavelength of the main emission spectrum of between 365 nm and 420 nm. Furthermore, when a shorter wavelength is needed, US Pat. No. 6,084,250 discloses a LED that can emit actinic radiation whose wavelength is centered between 300 nm and 370 nm. Furthermore, another violet LED is available, and irradiation can be carried out with radiation of a different UV bandwidth. The actinic radiation source in the present invention is preferably a UV-LED, and a UV-LED having a peak wavelength at 340 to 400 nm is particularly preferable.

The maximum illumination intensity of the LED on a recording medium is preferably 10 to 2,000 mW/cm$^2$, more preferably 20 to 1,000 mW/cm$^2$, and particularly preferably 50 to 800 mW/cm$^2$.

The ink composition of the present invention is desirably exposed to such actinic radiation for preferably 0.01 to 120 sec., and more preferably 0.1 to 90 sec.

Irradiation conditions and a basic method for irradiation with actinic radiation are disclosed in JP-A-60-132767. Specifically, a light source is provided on either side of a head unit that includes an ink composition discharge device, and the head unit and the light source are made to scan by a so-called shuttle system. Irradiation with actinic radiation is carried out after a certain time (preferably 0.01 to 0.5 sec., more preferably 0.01 to 0.3 sec., and yet more preferably 0.01 to 0.15 sec.) has elapsed from when the ink composition has landed. By controlling the time from ink composition landing to irradiation so as to be a minimum in this way, it becomes possible to prevent the ink composition that has landed on a recording medium from spreading before being cured. Furthermore, since the ink composition can be exposed before it reaches a deep area of a porous recording medium that the light source cannot reach, it is possible to prevent monomer from remaining unreacted.

Furthermore, curing may be completed using another light source that is not driven. WO99/54415 discloses, as an irradiation method, a method employing an optical fiber and a method in which a collimated light source is incident on a mirror surface provided on a head unit side face, and a recorded area is irradiated with UV light. Such curing methods may be also applied to the inkjet recording method of the present invention.

By employing such a inkjet recording method as described above, it is possible to maintain a uniform dot diameter for landed ink composition even for various types of recording medium (support) having different surface wettability, thereby improving the image quality. In order to obtain a color image, it is preferable to superimpose colors in order from those with a high lightness. By superimposing ink compositions in order from one with high lightness, it is easy for radiation to reach a lower ink composition, the curing sensitivity is good, the amount of residual monomer decreases, and an improvement in adhesion can be expected. Furthermore, although it is possible to discharge all colors and then expose them at the same time, it is preferable to expose one color at a time from the viewpoint of promoting curing.

In this way the ink composition of the present invention may be cured by irradiation with actinic radiation in high sensitivity and form an image on the surface of the recording medium.

The inkjet recording method of the present invention may suitably employ the ink set of the present invention. The order in which colored ink compositions are discharged is not particularly limited, but it is preferable to apply to a recording medium from an ink composition having a high lightness; when the ink compositions of yellow, cyan, magenta, and black are used, they are preferably applied on top of the recording medium in the order yellow → cyan → magenta → black. Furthermore, when white is additionally used, they are preferably applied on top of the recording medium in the order white → yellow → cyan → magenta → black. Moreover, the present invention is not limited thereto, and an ink set comprising a total of seven colors, that is, light cyan, light magenta ink compositions and cyan, magenta, black, white, and yellow dark ink compositions may preferably be used, and in this case they are applied on top of the recording medium in the order white → light cyan → light magenta → yellow → cyan → magenta → black.

When the ink set of the present invention is used for molding, which is described later, it is preferable that an ink composition that is usually positioned on the uppermost surface, which is the most likely to be in contact with a mold,

is the ink composition of the present invention, and it is more preferable that an ink composition that is positioned on the outermost surface, which is in contact with a mold, is the ink composition of the present invention.

In the present invention, the recording medium is not particularly limited, and a recording medium known as a support and a recording material may be used. Examples thereof include paper, paper laminated with a plastic (e.g. polyethylene, polypropylene, polystyrene, etc.), a metal plate (e.g. aluminum, zinc, copper, etc.), a plastic film (e.g. cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinylacetal, polyvinyl chloride (PVC), acrylic resin, etc.), and paper or plastic film laminated or vapor-deposited with the above metal (e.g. an aluminum composite plate, etc.). In the present invention, as the recording medium, a non-absorbing recording medium may suitably be used.

The recording medium is preferably a transparent recording medium, and more preferably a transparent polymer film or sheet.

(Ink set)

The ink set of the present invention comprises at least one type of the radiation-curable ink composition of the present invention.

When the ink set of the present invention is used for molding, which is described later, it is preferable that an ink composition that is usually positioned on the uppermost surface, which is the most likely to be in contact with a mold, is the radiation-curable ink composition of the present invention, and it is more preferable that an ink composition that is positioned on the outermost surface, which is in contact with a mold, is the radiation-curable ink composition of the present invention.

Furthermore, at least one type of the radiation-curable ink composition of the present invention contained in the ink set of the present invention is preferably a white ink composition and/or clear ink composition, and more preferably a white ink composition.

The ink set of the present invention may comprise one or more types of ink composition other than the radiation-curable ink composition of the present invention.

Moreover, in the ink set of the present invention, from the viewpoint of blocking resistance of a cured film and mold sticking-prevention properties during molding, it is particularly preferable that all of the ink compositions contained in the ink set are the radiation-curable ink composition of the present invention.

(Decorative sheet, decorative sheet molded product, and production process therefor)

The decorative sheet of the present invention is a decorative sheet comprising a cured image layer above a resin sheet, the cured image layer being formed by curing the radiation-curable ink composition of the present invention.

Furthermore, the decorative sheet molded product of the present invention is a molded product formed by molding the decorative sheet of the present invention.

The resin sheet is not particularly limited, and a resin film or a resin sheet described above as a recording medium may suitably be used. Among them, the material of the resin sheet is preferably a polycarbonate sheet.

The resin sheet is preferably a transparent resin sheet.

The thickness of the resin sheet is preferably at least 100 μm, more preferably 100 μm to 10 mm, yet more preferably 300 μm to 5 mm, and particularly preferably 600 μm to 3 mm.

Examples of said molding include vacuum forming, pressure forming, and vacuum/pressure forming.

The decorative sheet molded product of the present invention is preferably a decorative sheet molded product that is further subjected to hole making after molding.

When the decorative sheet of the present invention is used for molding, it is preferable that the outermost layer of a cured image layer in a section that is in contact with a mold during molding is a cured film of the ink composition of the present invention.

Furthermore, the decorative sheet molded product of the present invention preferably has a cured film of the ink composition of the present invention on the surface.

Furthermore, the ink composition of the present invention is suitable for production of a decorative sheet, and in this case an inkjet recording method comprising the steps below in the order shown is preferable.

A step of discharging the radiation-curable ink composition of the present invention onto a substrate by an inkjet method (step (a)), and
a step of irradiating the discharged ink composition with actinic radiation to thus produce a decorative sheet (step (b)).

Furthermore, it is also preferable to produce a decorative sheet molded product by subjecting the decorative sheet to a step involving molding, and preferably vacuum forming, pressure forming, or vacuum/pressure forming.

It is also preferable that the decorative sheet molded product is subjected to hole making. That is, the process

for producing the decorative sheet molded product of the present invention preferably comprises a step of subjecting a decorative sheet molded product that has been obtained by molding to hole making.

In particular, since the image layer obtained using the ink composition of the present invention is excellent in terms of stretchability and heat resistance, even when it is subjected to vacuum forming, pressure forming, or vacuum/pressure forming, image drop-outs, cracking, etc. are suppressed. Furthermore, the occurrence of cracking of the image during hole making is also suppressed.

<Vacuum forming, pressure forming, and vacuum/pressure forming>

Vacuum forming is a method in which a support having an image formed thereon is preheated to a temperature at which it can be thermally deformed, and molding is carried out by pressing it against a mold and cooling while sucking it toward the mold by means of a vacuum and stretching it. It is preferable to use a convex mold and a concave mold in combination in vacuum forming.

Pressure forming is a method in which a support having an image formed thereon is preheated to a temperature at which it can be thermally deformed, and molding is carried out by pressing it against a mold by applying pressure from the side opposite to the mold and cooling.

Vacuum/pressure forming is a method in which molding is carried out by applying a vacuum and pressure at the same time.

Details may be referred to in the 'Thermal Forming' section on p. 766 to 768 of 'Koubunshi Daijiten' (Polymer Dictionary) (Maruzen Co., Ltd.) and literature referred to in this section.

The forming temperature may be determined as appropriate according to the type of support and the support, but it is preferable to carry out forming at a support temperature of 60°C to 180°C, more preferably 80°C to 160°C, and yet more preferably 80°C to 150°C. When in this range, forming is carried out with little change in image color and excellent mold release.

Furthermore, the mold temperature is preferably 80°C to 120°C.

<Hole making and cutting (trimming)>

Trimming is removing an unwanted portion of a decorative sheet molded product by hole making, cutting, etc.

Hole making is making a hole having any shape such as a pattern or a character in a printed material, etc., and there is punching using a conventionally known press, etc., hole making by means of drilling, and a hole making method by means of a laser. Among them, punching using a press, etc. is a method suitable when large numbers of identical products are made. Punching using a press, etc. is a method in which a printed material placed on a mold is sheared using a press equipped with a punching blade.

The decorative sheet molded product of the present invention is preferably one that has been subjected to hole making.

Cutting is cutting an unwanted portion, etc. of a decorative sheet molded product, and may be carried out suitably by means of a known press, a guillotine cutter, a laser processor, etc.

When a printed material or decorative sheet molded product produced by using the inkjet ink composition of the present invention is subjected to trimming, it is preferably carried out at a temperature of 20°C to 150°C, more preferably at a temperature of 20°C to 100°C, and particularly preferably at a temperature of 25°C to 60°C. When in this range, change in color of the image is suppressed, and release from a mold is excellent.

(In-mold molded article and process for producing same)

The ink composition is particularly preferably for an in-mold molded.

The in-mold molded article of the present invention is an in-mold molded article obtained using the decorative sheet of the present invention or the decorative sheet molded product of the present invention.

In the present invention, the process for producing an in-mold molded article more preferably comprises (step 1) a step of placing a molded printed material on an inner wall of a cavity formed by a plurality of molds, and (step 2) a step of injecting a molten resin into the cavity via a gate.

Examples of the step (1) include a step in which a molded printed material is placed within a mold and sandwiched. Specifically, the molded printed material is fed into a mold for molding formed from a plurality of movable and fixed molds, preferably with the image layer on the inside. In this process, a plurality of sheets of molded printed material may be fed one by one, or a required portion of a long molded printed material may be fed intermittently.

When the sheet is placed within a mold, (i) it is placed by simply heating a mold and carrying out suction by evacuating the mold to give intimate contact, or (ii) it is placed by heating and softening from the image layer side using a heated platen, preliminarily molding the sheet so as to make it follow the shape of the interior of the mold, and carrying

out mold clamping so that there is intimate contact with an inner face of the mold. The heating temperature in (ii) is preferably at least around the glass transition temperature of a substrate film but less than the melting temperature (or melting point), and it is more preferably a temperature around the glass transition temperature. Around the glass transition temperature means a range of on the order of ±5°C of the glass transition temperature, and is preferably on the order of 70°C to 130°C. In the case of (ii), for the purpose of putting the decorative sheet into intimate contact with the mold surface, when heating and softening the sheet using a heated platen, suction by evacuating may be carried out.

In the present invention, a decorative sheet molded product that had been molded may be placed within a mold.

The step (2) is an injection step in which a molten resin is injected into the cavity (hollow part) and cooled and solidified to thus laminate and integrate a resin molding and the molded printed material. When the injection resin is a thermoplastic resin, it is put into a fluid state by heating and melting, and when the injection resin is a thermosetting resin, an uncured liquid composition is heated as appropriate and injected in a fluid state, and solidified by cooling. This enables the molded printed material to integrate with and stick to the resin molding thus formed, thereby giving an in-mold molded article. The heating temperature for the injection resin depends on the injection resin, but is preferably on the order of 180°C to 280°C.

Any injection resin may be used in the in-mold molded article as long as it is a thermoplastic resin or thermosetting resin (including a two-component curable resin) that can be injection-molded, and various resins may be used. Examples of such thermoplastic resin materials include a polystyrene-based resin, a polyolefin-based resin, an acrylonitrile-butadiene-styrene copolymer (ABS resin) (including a heat-resistant ABS resin), an acrylonitrile-styrene copolymer (AS resin), an acrylonitrile resin (AN resin), a polyphenylene oxide-based resin, a polycarbonate-based resin, a polyacetal-based resin, an acrylic-based resin, a polyethylene terephthalate-based resin, a polybutylene terephthalate-based resin, a polysulfone-based resin, and a polyphenylene sulfide-based resin. Examples of the thermosetting resin include a two-component reaction-curing type polyurethane-based resin and an epoxy-based resin. These resins may be used singly or as a mixture of two or more types.

In addition to the above steps, it is preferable to have a step of removing from the mold a molding having the resin molding integrated with the molded printed material.

Examples

The present invention is explained more specifically below by reference to Examples, Reference Examples and Comparative Examples. Reference Examples concern ink compositions not comprising a urethane oligomer having a polymerizable group and a partial structure represented by formula a-1 (Reference Examples 9, 14, 15, 16). However, the present invention should not be construed as being limited by these Examples. 'Parts' in the description below denotes 'parts by mass' and '%' denotes 'mass%' unless otherwise specified.

Furthermore, '(YES)' in the surfactant column in Table 2 to Table 10 below denotes that the corresponding surfactant is one that has a polymerizable group.

The compounds used in the present Examples are listed below.

<Pigments>

CINQUASIA MAGENTA RT-355D (magenta pigment, mixed crystal of C.I. Pigment Violet 19 and C.I. Pigment Red 202, BASF Japan)
IRGALITE BLUE GLVO (cyan pigment, C.I. Pigment Blue 15:4, BASF Japan) NOVOPERM YELLOW H2G (yellow pigment, C.I. Pigment Yellow 120, Clariant) Mogul E (black pigment, carbon black, C.I. Pigment Black 7, Cabot) KRONOS 2300 (white pigment, titanium oxide, KRONOS)

<Dispersants>

BYK JET9151 (pigment dispersing agent, BYK Chemie)
Solsperse 32000 (pigment dispersing agent, The Lubrizol Corporation)
Solsperse 41000 (pigment dispersing agent, The Lubrizol Corporation)
EFKA 7701 (pigment dispersing agent, BASF): acrylic block copolymer
EFKA 7731 (pigment dispersing agent, BASF)

<Monofunctional polymerizable compounds (monofunctional monomers)>

NVC (BASF): *N*-vinylcaprolactam
EOEOEA (product name SR256, Sartomer): ethoxyethoxyethyl acrylate
CTFA (product name SR531, Sartomer): cyclic trimethylolpropaneformal acrylate

TBCHA (product name SR217, Sartomer): *t*-butylcyclohexyl acrylate
PEA (product name SR339, Sartomer): phenoxyethyl acrylate
CHA (Tokyo Chemical Industry Co., Ltd.): cyclohexyl acrylate
CD420 (Sartomer): isophoryl acrylate (3,3,5-trimethylcyclohexyl acrylate)
THFA (product name SR285, Sartomer): tetrahydrofurfuryl acrylate
IBOA (product name SR506, Sartomer): isobornyl acrylate
BZA (product name BZA, Hitachi Chemical Co., Ltd.): benzyl acrylate

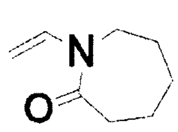
NVC

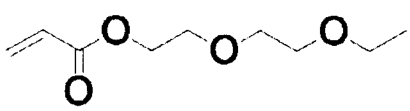
EOEOEA

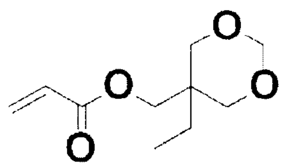
CTFA

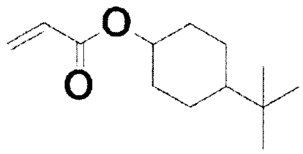
TBCHA

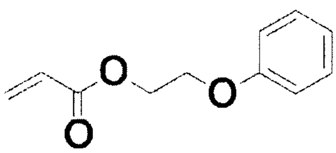
PEA

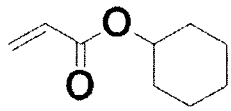
CHA

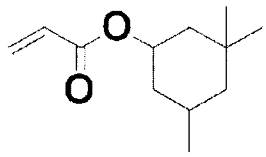
CD420

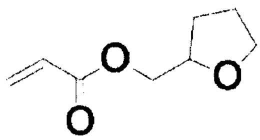
THFA

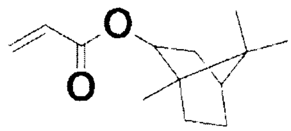
IBOA

<Polyfunctional polymerizable compounds (polyfunctional oligomer/polyfunctional monomer)>

CN996 (having isophorone skeleton, Sartomer): urethane acrylate oligomer CN9031 (having isophorone skeleton, Sartomer): urethane acrylate oligomer CN962 (having hydrogenated diphenylmethane structure, Sartomer): urethane acrylate oligomer
DPGDA: polyfunctional polymerizable compound, dipropylene glycol diacrylate A-600 (Shin-Nakamura Chemical Co., Ltd.): polyfunctional polymerizable compound, polyethylene glycol diacrylate (molecular weight ≈708)

<Surfactants>

TEGO Rad series (silicone-based surfactants, Evonik)
Megaface series (fluorine-based surfactants, DIC)
BYK series (silicone-based surfactants, BYK Chemie)
X-22 series, KF series (silicone-based surfactants, Shin-Etsu Chemical Co., Ltd.)

The surface tension (specific surface tension) of each surfactant was measured by the method described above and the results are summarized in Table 1.

(Table 1)

| | | Polymerizable group | | | |
|---|---|---|---|---|---|
| | | YES | | None | |
| | | Surfactant type | Measurement value of Surface tension (mN/m) | Surfactant type | Measurement value of Surface tension (mN/m) |
| Surface tension | Greater than 18 mN/m but no greater than 23 mN/m | TEGO Rad 2700 | 21.9 | Megaface F558 | 18.3 |
| | | TEGO Rad 2650 | 22.1 | Megaface EXP TF1540 | 18.9 |
| | | TEGO Rad 2600 | 22.7 | Megaface F555 | 19.1 |
| | | Megaface RS76 | 18.7 | BYK378 | 22.4 |
| | | Megaface RS77 | 19.1 | BYK333 | 22.8 |
| | | Megaface RS90 | 20.5 | BYK306 | 23.0 |
| | | | | BYK333 | 22.7 |
| | | | | BYK377 | 22.9 |
| | | | | X-22 series | 22.8 |
| | | | | KF6012 | 22.6 |
| | Greater than 23 mN/m but no greater than 28 mN/m | TEGO Rad 2500 | 23.1 | Megaface F477 | 23.8 |
| | | TEGO Rad 2300 | 23.4 | Megaface F553 | 24.1 |
| | | TEGO Rad 2250 | 23.8 | Megaface F554 | 24.4 |
| | | TEGO Rad 2200 | 24.1 | BYK307 | 25.1 |
| | | TEGO Rad 2010 | 23.7 | BYK310 | 25.8 |
| | | BYK UV3500 | 24.1 | BYK313 | 26.1 |
| | | BYK UV3505 | 24.5 | | |
| | | BYK UV3510 | 25.4 | | |
| | | BYK UV3530 | 25.8 | | |
| | | BYK UV3575 | 26.8 | | |
| | | Megaface RS75 | 23.1 | | |
| | | Megaface RS72 | 23.2 | | |
| | Greater than 28 mN/m but no greater than 32 mN/m | TEGO Rad 2100 | 29.2 | BYK350 | 30.1 |
| | | TEGO Rad 2011 | 29.7 | BYK331 | 31.2 |
| | | BYK UV3535 | 30.1 | BYK320 | 30.9 |
| | | BYK UV3510 | 31.1 | | |
| | | BYK UV3570 | 28.9 | | |
| | | BYK UV3576 | 29.5 | | |

<Polymerization initiators>

TPO (BASF Japan): 2,4,6-trimethylbenzoyldiphenylphosphine oxide
Irgacure 819 (bisacylphosphine photopolymerization initiator, BASF Japan): bis(2,4,6-trimethylbenzoyl)phenylphosphine oxide
Irgacure 184 (BASF Japan): 1-hydroxycyclohexyl phenyl ketone
Irgacure 369 (BASF Japan): 2-benzyl-2-dimethylamino-1-(4-morpholinophenyl)butan-1-one
Irgacure 907 (BASF Japan): 2-methyl-1-(4-methylthiophenyl)-2-morpholinopropan-1-one
ITX (photopolymerization initiator, Shell Chemicals Japan): isopropylthioxanthone

<Others>

BR113 (Mitsubishi Rayon Co., Ltd.): acrylic resin (inactive methyl methacrylate copolymer)
OH-TEMPO (polymerization inhibitor): 4-hydroxy TEMPO (4-hydroxy-2,2,6,6-tetramethylpiperidine 1-oxyl)
UV-12 (polymerization inhibitor, Kroma Chem): tris(*N*-nitroso-*N*-phenylhydroxyamine) aluminum salt

(Preparation of mill base)

<Preparation of cyan mill base C>

C pigment (cyan pigment): IRGALITE BLUE GLVO (BASF Japan): 30 parts by mass
PEA: 60 parts by mass
Solsperse 32000: 10 parts by mass

The above components were stirred, thus giving cyan mill base C. Preparation of the pigment mill base was carried out in an M50 disperser motor mill (Eiger Machinery, Inc.) using zirconia beads having a diameter of 0.65 mm at a peripheral speed of 9 m/s for 8 hours.

<Preparation of magenta mill base M>

M pigment (magenta pigment): CINQUASIA MAGENTA RT-355D (BASF Japan): 30 parts by mass
PEA: 60 parts by mass
Solsperse 32000: 10 parts by mass

The above components were stirred, thus giving magenta mill base M. Preparation of the pigment mill base was carried out in an M50 disperser motor mill (Eiger Machinery, Inc.) using zirconia beads having a diameter of 0.65 mm at a peripheral speed of 9 m/s for 8 hours.

<Preparation of yellow mill base Y>

Y pigment (yellow pigment): NOVOPERM YELLOW H2G (Clariant): 30 parts by mass
PEA: 60 parts by mass
Solsperse 32000: 10 parts by mass

The above components were stirred, thus giving yellow mill base Y. Preparation of the pigment mill base was carried out in an M50 disperser motor mill (Eiger Machinery, Inc.) using zirconia beads having a diameter of 0.65 mm at a peripheral speed of 9 m/s for 8 hours.

<Preparation of black mill base K>

K pigment (black pigment) Mogul E (Cabot): 30 parts by mass
PEA: 60 parts by mass
EFKA 7731: 10 parts by mass

The above components were stirred, thus giving black mill base K. Preparation of the pigment mill base was carried out in an M50 disperser motor mill (Eiger Machinery, Inc.) using zirconia beads having a diameter of 0.65 mm at a peripheral speed of 9 m/s for 8 hours.

<Preparation of white mill base W>

W pigment (white pigment): KRONOS 2300 (white pigment, KRONOS): 45 parts by mass
PEA: 50 parts by mass
Solsperse 41000: 5 parts by mass

The above components were stirred, thus giving white mill base W. Preparation of the pigment mill base was carried out in an M50 disperser motor mill (Eiger Machinery, Inc.) using zirconia beads having a diameter of 0.65 mm at a peripheral speed of 9 m/s for 8 hours.

(Examples 1 to 8, 10 to 13, and 17 to 63, Reference Examples 9 and 14 to 16, and Comparative Examples 1 to 15)

<Preparation of ink composition>

Components described in Table 2 to Table 10 below were stirred using a mixer (Silverson L4R) at 2,500 rpm

for 15 minutes. Subsequently, filtration was carried out using a cartridge filter (product name Profile II AB01A01014J) manufactured by Pall Corporation, thus giving ink compositions of each color.

<Inkjet recording method>

Recording was carried out on a recording medium using an Acuity LED1600 inkjet recording system (Fujifilm Corporation) having piezo type inkjet nozzles. The ink supply system comprised a main tank, a supply pipe, an ink supply tank immediately before an inkjet head, a filter, and a piezo type inkjet head, and a section from the ink supply tank to the inkjet head was thermally insulated and heated. Temperature sensors were provided on the ink supply tank and in the vicinity of the nozzle of the inkjet head, and the temperature was controlled so that the nozzle section was always at 45°C ±2°C. The piezo type inkjet head was driven so as to discharge multisize dots of 1 to 60 pL at resolutions of 1,200 × 1,200 dpi, 900 × 800 dpi, and 600 × 500 dpi. Here, the dpi referred to in the present invention denotes the number of dots per 2.54 cm. The recording medium employed a polycarbonate substrate (film thickness 400 μm Teijin Chemicals Ltd., product name: Panlite).

The number of reciprocations of the head when images were formed with the above resolutions were as follows.

24 reciprocations for 1,200 × 1,200 dpi
16 reciprocations for 900 × 800 dpi
10 reciprocations for 600 × 500 dpi

The number of nozzles used when the head reciprocated varied according to the image formation mode:

when an image with only one YMCK color layer was formed, 256 nozzles were used for YMCK,
when an image with two layers, that is, YMCK color and W, was formed in one pass, 128 nozzles out of 256 nozzles were used for YMCK and 128 nozzles out of 256 nozzles were used for W,
when an image with two layers, that is, YMCK color and CL, was formed in one pass, 128 to 255 nozzles out of 256 nozzles were used for YMCK, and 128 to 1 nozzles out of 256 nozzles were used for CL, and
when an image with three layers, that is, YMCK color, W, and CL, was formed in one pass, 85 to 127 nozzles out of 256 nozzles were used for YMCK, 85 to 127 nozzles out of 256 nozzles were used for W, and 85 to 1 nozzle out of 256 nozzles were used for CL.

When a clear ink is discharged, the nozzles to be used can be freely changed, and the number of nozzles did not affect the quality of an image film formed.

-Evaluation methods-

<Sticking to mold (mold sticking-prevention properties)>

Ink drawing of solid images was carried out on a transparent substrate (polycarbonate, thickness 400 μm) as a resin sheet using the ink compositions prepared in the Examples and Comparative Examples in accordance with the inkjet recording method, and subjected to molding using a vacuum forming machine (CUVF-1216-PWB, Fu-se Vacuum Forming). Molding conditions were: mold temperatures of 60°C, 70°C, and 80°C, and a substrate temperature of 150°C, the mold being made of aluminum.

The evaluation criteria for mold sticking were as follows.

5: no sound of sticking or transfer for a mold temperature of 80°C.
4: no sound of sticking or transfer for a mold temperature of 70°C, but there was sound of sticking for a mold temperature of 80°C.
3: no sound of sticking or transfer for a mold temperature of 60°C, but there was sound of sticking for a mold temperature of 70°C.
2: sound of sticking and transfer to mold.
1: image stuck to mold and could not be detached.

An evaluation of 5 was the best, and an evaluation of 3 or greater was a range that gave no problems in practice.

<Blocking resistance>

Ink drawing of solid images was carried out on a transparent substrate (polycarbonate, thickness 400 μm) as a resin sheet using the ink compositions prepared in the Examples and Comparative Examples in accordance with the inkjet recording method and cut into A6 size, another transparent substrate of the same type and a weight of 1 kg was

placed thereon and allowed to stand at room temperature (25°C) for one day, and transfer to the transparent polycarbonate substrate that had been placed on the image was evaluated.

The evaluation criteria for blocking resistance were as follows.

5: no transfer at all.
4: no transfer but there was sound.
3: only some transparent transfer was observed.
2: transparent transfer was observed for the whole surface.
1: color transfer occurred.

An evaluation of 5 was the best, and an evaluation of 3 or greater was a range that gave no problems in practice.

<Measurement of thermal stretching ratio (stretchability)>

Ink drawing of solid images having an average film thickness of 30 μm was carried out on a transparent substrate (polycarbonate, thickness 400 μm) as a resin sheet using the ink compositions prepared in the Examples and Comparative Examples in accordance with the inkjet recording method, and the ink images were cut to a size of 5 cm × 2 cm and subjected to measurement of stretching ratio by pulling using the stretching machine and temperature conditions below.
Equipment used: Tensilon (Shimadzu Corporation)
Conditions: temperature 180°C, pulling speed 50 millimeter/min.

Length at break was measured and the stretching ratio was calculated. The stretching ratio was determined from

stretching ratio = {(length at break - length before stretching)/length before stretching} × 100.

((Example) when there was break at 10 cm, it was calculated as {(10 cm - 5 cm)/5 cm} × 100 = 100% of stretching)

The evaluation criteria for thermal stretchability were as follows.

5: stretching ratio of at least 200%.
4: stretching ratio of at least 150% but less than 200%.
3: stretching ratio of at least 100% but less than 150%.
2: stretching ratio of at least 70% but less than 100%.
1: stretching ratio of less than 70%.

An evaluation of 5 was the best, and an evaluation of 3 or greater was a range that gave no problems in practice.

<Punching suitability evaluation (crack suppression properties)>

Ink drawing of solid images having an average film thickness of 30 μm was carried out on a transparent substrate (polycarbonate, thickness 400 μm) as a resin sheet using the ink compositions of the Examples and Comparative Examples in accordance with the inkjet recording method, thus producing ink films. A punching test was carried out using an office punch under the conditions below, and the suitability for punching was evaluated by means of examination by eye and by an optical microscope.
Equipment used: office punch (product name: DP-23 Blue, MAX Co., Ltd.) Conditions: ink film was punched at a temperature of 25°C.

The evaluation criteria for suitability for punching were as follows.

5: there was no cracking at all in any part of the image when examined by eye and by optical microscope.
4: there were no greater than two parts with cracking in the image when examined by optical microscope, but they were not visible by eye.
3: there were at least three parts with cracking in the image when examined by optical microscope, but they were not visible by eye.
2: cracking occurred around the punch hole and was visible by eye.
1: cracking occurred and spread at least 5 cm from the punch hole.

An evaluation of 5 was the best, and an evaluation of 3 or greater was a range that gave no problems in practice.

<Inkjet discharge properties (discharge properties)>

Continuous printing using Acuity LED1600 inkjet recording equipment (Fujifilm Corporation) at resolutions of 1,200 × 1,200 dpi, 900 × 800 dpi, and 600 × 500 dpi for 30 minutes was repeated five times and evaluated.
The evaluation criteria were as follows.

5: continuous discharge was possible without missing nozzles for all five times. 4: continuous discharge was possible without missing nozzles up to the fourth time.

3: continuous discharge was possible without missing nozzles up to the third time.

2: continuous discharge was possible without missing nozzles up to the second time.

1: continuous discharge was possible without missing nozzles only for the first time or continuous discharge was impossible from the first time.

An evaluation of 5 was the best, and an evaluation of 3 or greater was a range that gave no problems in practice.
The evaluation results are summarized in Table 2 to Table 10.

(Table 2)

| Example/Reference Example No. | | 1 | 2 | 3 | 4 | 5 | 6 | 7 | 8 | 9 | 10 |
|---|---|---|---|---|---|---|---|---|---|---|---|
| White mill base | | 30 | 30 | 30 | 30 | 30 | 30 | 30 | 15 | 30 | 30 |
| Monofunctional monomer | NVC | - | 10 | 24 | 38 | 24 | 24 | 24 | 24 | 24 | 24 |
| | IBOA | 45 | 35 | 20 | - | - | 10 | 30.2 | 45.2 | 20 | 20 |
| | PEA | 9.2 | 9.2 | 10.2 | 16.2 | 30.2 | 20.2 | - | - | 11.2 | 10.7 |
| Polyfunctional oligomer | CN996 | 1 | 1 | 1 | 1 | 1 | 1 | 1 | 1 | - | 0.5 |
| Resin | BR113 | 1 | 1 | 1 | 1 | 1 | 1 | 1 | 1 | 1 | 1 |
| Surfactant | TEGO Rad 2010 (YES) | 1 | 1 | 1 | 1 | 1 | 1 | 1 | 1 | 1 | 1 |
| | BYK378 | 0.3 | 0.3 | 0.3 | 0.3 | 0.3 | 0.3 | 0.3 | 0.3 | 0.3 | 0.3 |
| Polymerization initiator | TPO | 5 | 5 | 5 | 5 | 5 | 5 | 5 | 5 | 5 | 5 |
| | Irgacure 819 | 5 | 5 | 5 | 5 | 5 | 5 | 5 | 5 | 5 | 5 |
| | ITX | 1 | 1 | 1 | 1 | 1 | 1 | 1 | 1 | 1 | 1 |
| Dispersant | BYK JET9151 | 1 | 1 | 1 | 1 | 1 | 1 | 1 | 1 | 1 | 1 |
| Polymerization inhibitor | OH-TEMPO | 0.3 | 0.3 | 0.3 | 0.3 | 0.3 | 0.3 | 0.3 | 0.3 | 0.3 | 0.3 |
| | UV-12 | 0.2 | 0.2 | 0.2 | 0.2 | 0.2 | 0.2 | 0.2 | 0.2 | 0.2 | 0.2 |
| Total | | 100 | 100 | 100 | 100 | 100 | 100 | 100 | 100 | 100 | 100 |
| Stretchability | | 5 | 5 | 5 | 5 | 4 | 4 | 5 | 5 | 5 | 5 |
| Blocking resistance | | 3 | 4 | 5 | 4 | 3 | 4 | 5 | 5 | 4 | 5 |
| Mold sticking-prevention properties | | 5 | 5 | 5 | 5 | 5 | 5 | 5 | 5 | 3 | 4 |
| Crack suppression properties | | 3 | 4 | 5 | 5 | 5 | 5 | 4 | 3 | 5 | 5 |
| Discharge properties | | 5 | 5 | 5 | 5 | 5 | 5 | 5 | 5 | 5 | 5 |

(Table 3)

| Example/Reference Example No. | | 11 | 12 | 13 | 14 | 15 | 16 | 17 | 18 | 19 | 20 |
|---|---|---|---|---|---|---|---|---|---|---|---|
| White mill base | | 30 | 30 | 30 | 30 | 30 | 30 | 30 | 30 | 30 | 30 |
| Monofunctional monomer | NVC | 24 | 24 | 24 | 24 | 24 | 24 | 24 | 24 | 24 | 24 |
| | IBOA | 20 | 20 | 20 | 20 | 20 | 20 | - | 20 | 20 | 20 |
| | PEA | 7.2 | 3.2 | 10.2 | 10.2 | 10.2 | 10.2 | 10.2 | - | - | - |
| | CTFA | - | - | - | - | - | - | - | 5.1 | - | - |
| | EOEOEA | - | - | - | - | - | - | - | 5.1 | - | - |
| | TBCHA | - | - | - | - | - | - | 20 | - | - | - |
| | CD420 | - | - | - | - | - | - | - | - | 5.1 | - |
| | CHA | - | - | - | - | - | - | - | - | 5.1 | 5.1 |
| | THFA | - | - | - | - | - | - | - | - | - | 5.1 |
| Polyfunctional oligomer | CN996 | 4 | 8 | - | - | - | - | 1 | 1 | 1 | 1 |
| | CN9031 | - | - | 1 | - | - | - | - | - | - | - |
| | CN962 | - | - | - | 1 | - | - | - | - | - | - |
| Polyfunctional monomer | DPGDA | - | - | - | - | 1 | - | - | - | - | - |
| | A1000 | - | - | - | - | - | 1 | - | - | - | - |
| Resin | BR113 | 1 | 1 | 1 | 1 | 1 | 1 | 1 | 1 | 1 | 1 |
| Surfactant | TEGO Rad 2010 (YES) | 1 | 1 | 1 | 1 | 1 | 1 | 1 | 1 | 1 | 1 |
| | BYK378 | 0.3 | 0.3 | 0.3 | 0.3 | 0.3 | 0.3 | 0.3 | 0.3 | 0.3 | 0.3 |
| Polymerization initiator | TPO | 5 | 5 | 5 | 5 | 5 | 5 | 5 | 5 | 5 | 5 |
| | Irgacure 819 | 5 | 5 | 5 | 5 | 5 | 5 | 5 | 5 | 5 | 5 |
| | ITX | 1 | 1 | 1 | 1 | 1 | 1 | 1 | 1 | 1 | 1 |
| Dispersant | BYK JET9151 | 1 | 1 | 1 | 1 | 1 | 1 | 1 | 1 | 1 | 1 |
| Polymerization inhibitor | OH-TEMPO | 0.3 | 0.3 | 0.3 | 0.3 | 0.3 | 0.3 | 0.3 | 0.3 | 0.3 | 0.3 |
| | UV-12 | 0.2 | 0.2 | 0.2 | 0.2 | 0.2 | 0.2 | 0.2 | 0.2 | 0.2 | 0.2 |
| Total | | 100 | 100 | 100 | 100 | 100 | 100 | 100 | 100 | 100 | 100 |
| Stretchability | | 4 | 3 | 5 | 5 | 4 | 4 | 5 | 4 | 5 | 5 |
| Blocking resistance | | 5 | 5 | 5 | 5 | 5 | 5 | 5 | 4 | 4 | 4 |
| Mold sticking-prevention properties | | 5 | 5 | 5 | 4 | 5 | 5 | 5 | 4 | 4 | 4 |
| Crack suppression properties | | 5 | 5 | 5 | 5 | 5 | 5 | 5 | 5 | 5 | 5 |
| Discharge properties | | 5 | 5 | 5 | 5 | 5 | 5 | 5 | 5 | 5 | 5 |

(Table 4)

| Example No. | | 21 | 22 | 23 | 24 | 25 | 26 | 27 | 28 | 29 |
|---|---|---|---|---|---|---|---|---|---|---|
| White mill base | | 30 | 30 | 30 | 30 | 30 | 30 | 30 | 30 | 30 |
| Monofunctional monomer | NVC | 24 | 24 | 24 | 24 | 24 | 24 | 24 | 24 | 24 |
| | IBOA | 20 | 20 | 20 | 20 | 20 | 20 | 20 | 20 | 20 |
| | PEA | 10.2 | 10.2 | 10.2 | 10.2 | 10.2 | 10.2 | 10.2 | 10.2 | 10.2 |
| Polyfunctional oligomer | CN996 | 2 | 1 | 1 | 1 | 1 | 1 | 1 | 1 | 1 |

(continued)

| Example No. | | 21 | 22 | 23 | 24 | 25 | 26 | 27 | 28 | 29 |
|---|---|---|---|---|---|---|---|---|---|---|
| Resin | BR113 | - | 1 | 1 | 1 | 1 | 1 | 1 | 1 | 1 |
| Surfactant | TEGO Rad 2010 (YES) | 1 | 1 | 1 | 1 | 1 | 1 | 1 | 1 | 1 |
| | BYK378 | 0.3 | 0.3 | 0.3 | 0.3 | 0.3 | 0.3 | 0.3 | 0.3 | 0.3 |
| Polymerization initiator | TPO | 5 | - | 10 | 5 | 5 | 5 | 5 | 5 | 5 |
| | Irgacure 819 | 5 | 10 | - | - | - | 6 | 5 | 5 | 5 |
| | Irgacure 184 | - | - | - | 5 | - | - | - | - | - |
| | Irgacure 369 | - | - | - | - | 2.5 | - | - | - | - |
| | Irgacure 907 | - | - | - | - | 2.5 | - | - | - | - |
| | ITX | 1 | 1 | 1 | 1 | 1 | - | 1 | 1 | 1 |
| Dispersant | EFKA 7701 | - | - | - | - | - | - | 1 | - | - |
| | BYK JET9151 | 1 | 1 | 1 | 1 | 1 | 1 | - | 1 | 1 |
| Polymerization inhibitor | OH-TEMPO | 0.3 | 0.3 | 0.3 | 0.3 | 0.3 | 0.3 | 0.3 | - | 0.5 |
| | UV-12 | 0.2 | 0.2 | 0.2 | 0.2 | 0.2 | 0.2 | 0.2 | 0.5 | - |
| Total | | 100 | 100 | 100 | 100 | 100 | 100 | 100 | 100 | 100 |
| Stretchability | | 5 | 5 | 5 | 5 | 5 | 5 | 5 | 5 | 5 |
| Blocking resistance | | 4 | 5 | 5 | 5 | 5 | 5 | 5 | 5 | 5 |
| Mold sticking-prevention properties | | 5 | 5 | 5 | 5 | 5 | 5 | 5 | 5 | 5 |
| Crack suppression properties | | 5 | 5 | 5 | 5 | 5 | 5 | 5 | 5 | 5 |
| Discharge properties | | 5 | 5 | 5 | 5 | 5 | 5 | 5 | 5 | 5 |

(Table 5)

| Example No. | | 30 | 31 | 32 | 33 | 34 | 35 | 36 | 37 | 38 | 39 |
|---|---|---|---|---|---|---|---|---|---|---|---|
| White mill base | | 30 | 30 | 30 | 30 | 30 | 30 | 30 | 30 | 30 | 30 |
| Monofunctional monomer | NVC | 24 | 24 | 24 | 24 | 24 | 24 | 24 | 24 | 24 | 24 |
| | IBOA | 20 | 20 | 20 | 20 | 20 | 20 | 20 | 20 | 20 | 20 |
| | PEA | 10.2 | 11.2 | 11.2 | 11.2 | 11.2 | 11.2 | 11.2 | 11.2 | 11.2 | 11.2 |
| Polyfunctional oligomer | CN996 | 1 | 1 | 1 | 1 | 1 | 1 | 1 | 1 | 1 | 1 |
| Resin | BR113 | 1 | - | - | - | - | - | - | - | - | - |

(continued)

| Example No. | | 30 | 31 | 32 | 33 | 34 | 35 | 36 | 37 | 38 | 39 |
|---|---|---|---|---|---|---|---|---|---|---|---|
| Surfactant | TEGO Rad 2600 (YES) | 1 | 1 | 1 | 1 | - | - | - | - | - | - |
| | Megaface RS76 (YES) | - | - | - | - | 1 | 1 | - | - | - | - |
| | TEGO Rad 2010 (YES) | - | - | - | - | - | - | 1 | 1 | 1 | 1 |
| | TEGO Rad 2100 (YES) | - | - | - | - | - | - | - | - | - | - |
| | Megaface F558 | 0.3 | - | - | - | 0.3 | - | 0.3 | - | - | - |
| | BYK378 | - | 0.3 | - | - | - | 0.3 | - | 0.3 | - | - |
| | BYK307 | - | - | 0.3 | - | - | - | - | - | 0.3 | - |
| | BYK331 | - | - | - | 0.3 | - | - | - | - | - | 0.3 |
| Polymerization initiator | TPO | 5 | 5 | 5 | 5 | 5 | 5 | 5 | 5 | 5 | 5 |
| | Irgacure 819 | 5 | 5 | 5 | 5 | 5 | 5 | 5 | 5 | 5 | 5 |
| | ITX | 1 | 1 | 1 | 1 | 1 | 1 | 1 | 1 | 1 | 1 |
| Dispersant | BYK JET9151 | 1 | 1 | 1 | 1 | 1 | 1 | 1 | 1 | 1 | 1 |
| Polymerization inhibitor | OH-TEMPO | 0.3 | 0.3 | 0.3 | 0.3 | 0.3 | 0.3 | 0.3 | 0.3 | 0.3 | 0.3 |
| | UV-12 | 0.2 | 0.2 | 0.2 | 0.2 | 0.2 | 0.2 | 0.2 | 0.2 | 0.2 | 0.2 |
| Total | | 100 | 100 | 100 | 100 | 100 | 100 | 100 | 100 | 100 | 100 |
| Stretchability | | 5 | 5 | 5 | 5 | 5 | 5 | 5 | 5 | 5 | 5 |
| Blocking resistance | | 5 | 5 | 5 | 5 | 5 | 5 | 5 | 5 | 5 | 5 |
| Mold sticking-prevention properties | | 5 | 5 | 4 | 4 | 5 | 5 | 5 | 5 | 4 | 4 |
| Crack suppression properties | | 5 | 5 | 5 | 5 | 5 | 5 | 5 | 5 | 5 | 5 |
| Discharge properties | | 4 | 4 | 5 | 5 | 4 | 4 | 4 | 5 | 5 | 5 |

(Table 6)

| Example No. | | 40 | 41 | 42 | 43 | 44 | 45 | 46 | 47 | 48 | 49 |
|---|---|---|---|---|---|---|---|---|---|---|---|
| White mill base | | 30 | 30 | 30 | 30 | 30 | 30 | 30 | 30 | 30 | 30 |
| Monofunctional monomer | NVC | 24 | 24 | 24 | 24 | 24 | 24 | 24 | 24 | 24 | 24 |
| | IBOA | 20 | 20 | 20 | 20 | 20 | 20 | 20 | 20 | 20 | 20 |
| | PEA | 11.2 | 11.2 | 11.2 | 11.2 | 12.2 | 12.2 | 12.1 | 12.0 | 11.7 | 10.2 |
| Polyfunctional oligomer | CN996 | 1 | 1 | 1 | 1 | 1 | 1 | 1 | 1 | 1 | 1 |

(continued)

| Example No. | | 40 | 41 | 42 | 43 | 44 | 45 | 46 | 47 | 48 | 49 |
|---|---|---|---|---|---|---|---|---|---|---|---|
| Surfactant | TEGO Rad 2010 (YES) | - | - | - | - | 0.03 | 0.05 | 0.1 | 0.2 | 0.5 | 2 |
| | TEGO Rad 2100 (YES) | 1 | 1 | 1 | 1 | - | - | - | - | - | - |
| | Megaface F558 | 0.3 | - | - | - | - | - | - | - | - | - |
| | BYK378 | - | 0.3 | - | - | 0.3 | 0.3 | 0.3 | 0.3 | 0.3 | 0.3 |
| | BYK307 | - | - | 0.3 | - | - | - | - | - | - | - |
| | BYK331 | - | - | - | 0.3 | - | - | - | - | - | - |
| Polymerization initiator | TPO | 5 | 5 | 5 | 5 | 5 | 5 | 5 | 5 | 5 | 5 |
| | Irgacure 819 | 5 | 5 | 5 | 5 | 5 | 5 | 5 | 5 | 5 | 5 |
| | ITX | 1 | 1 | 1 | 1 | 1 | 1 | 1 | 1 | 1 | 1 |
| Dispersant | BYK JET9151 | 1 | 1 | 1 | 1 | 1 | 1 | 1 | 1 | 1 | 1 |
| Polymerization inhibitor | OH-TEMPO | 0.3 | 0.3 | 0.3 | 0.3 | 0.3 | 0.3 | 0.3 | 0.3 | 0.3 | 0.3 |
| | UV-12 | 0.2 | 0.2 | 0.2 | 0.2 | 0.2 | 0.2 | 0.2 | 0.2 | 0.2 | 0.2 |
| Total | | 100 | 100 | 100 | 100 | 100 | 100 | 100 | 100 | 100 | 100 |
| Stretchability | | 5 | 5 | 5 | 5 | 5 | 5 | 5 | 5 | 5 | 5 |
| Blocking resistance | | 5 | 5 | 5 | 5 | 3 | 3 | 4 | 4 | 5 | 5 |
| Mold sticking-prevention properties | | 4 | 4 | 3 | 3 | 3 | 3 | 4 | 4 | 5 | 5 |
| Crack suppression properties | | 5 | 5 | 5 | 5 | 5 | 5 | 5 | 5 | 5 | 5 |
| Discharge properties | | 5 | 5 | 5 | 5 | 5 | 5 | 5 | 5 | 5 | 5 |

(Table 7)

| Example No. | | 50 | 51 | 52 | 53 | 54 | 55 | 56 | 57 | 58 | 59 |
|---|---|---|---|---|---|---|---|---|---|---|---|
| White mill base | | 30 | 30 | 30 | 30 | 30 | 30 | 30 | 30 | 30 | 30 |
| Monofunctional monomer | NVC | 24 | 24 | 24 | 24 | 24 | 24 | 24 | 24 | 24 | 24 |
| | IBOA | 20 | 20 | 20 | 20 | 20 | 20 | 20 | 20 | 20 | 20 |
| | PEA | 7.2 | 2.2 | 11.5 | 11.5 | 11.4 | 11.3 | 11.0 | 9.5 | 6.5 | 1.5 |
| Polyfunctional oligomer | CN996 | 1 | 1 | 1 | 1 | 1 | 1 | 1 | 1 | 1 | 1 |
| Surfactant | TEGO Rad 2010 (YES) | 5 | 10 | 1 | 1 | 1 | 1 | 1 | 1 | 1 | 1 |
| | BYK378 | 0.3 | 0.3 | 0.03 | 0.05 | 0.1 | 0.2 | 0.5 | 2 | 5 | 10 |
| Polymerization initiator | TPO | 5 | 5 | 5 | 5 | 5 | 5 | 5 | 5 | 5 | 5 |
| | Irgacure 819 | 5 | 5 | 5 | 5 | 5 | 5 | 5 | 5 | 5 | 5 |
| | ITX | 1 | 1 | 1 | 1 | 1 | 1 | 1 | 1 | 1 | 1 |
| Dispersant | BYK JET9151 | 1 | 1 | 1 | 1 | 1 | 1 | 1 | 1 | 1 | 1 |
| Polymerization inhibitor | OH-TEMPO | 0.3 | 0.3 | 0.3 | 0.3 | 0.3 | 0.3 | 0.3 | 0.3 | 0.3 | 0.3 |
| | UV-12 | 0.2 | 0.2 | 0.2 | 0.2 | 0.2 | 0.2 | 0.2 | 0.2 | 0.2 | 0.2 |

(continued)

| Example No. | 50 | 51 | 52 | 53 | 54 | 55 | 56 | 57 | 58 | 59 |
|---|---|---|---|---|---|---|---|---|---|---|
| Total | 100 | 100 | 100 | 100 | 100 | 100 | 100 | 100 | 100 | 100 |
| Stretchability | 4 | 3 | 5 | 5 | 5 | 5 | 5 | 5 | 5 | 5 |
| Blocking resistance | 5 | 5 | 4 | 4 | 4 | 5 | 5 | 5 | 5 | 5 |
| Mold sticking-prevention properties | 5 | 5 | 3 | 4 | 4 | 5 | 5 | 5 | 5 | 5 |
| Crack suppression properties | 5 | 5 | 5 | 5 | 5 | 5 | 5 | 5 | 5 | 5 |
| Discharge properties | 4 | 3 | 5 | 5 | 5 | 5 | 5 | 4 | 4 | 3 |

(Table 8)

| Example No. | | 60 | 61 | 62 | 63 |
|---|---|---|---|---|---|
| Cyan mill base | | 9 | - | - | - |
| Yellow mill base | | - | 7 | - | - |
| Black mill base | | - | - | 9 | - |
| Magenta mill base | | - | - | - | 15 |
| Monofunctional monomer | NVC | 24 | 24 | 24 | 24 |
| | IBOA | 20 | 20 | 20 | 20 |
| | PEA | 31.2 | 34.2 | 32.2 | 26.2 |
| Polyfunctional oligomer | CN996 | 1 | 1 | 1 | 1 |
| Resin | BR113 | 1 | - | - | - |
| Surfactant | TEGO Rad 2010 (YES) | 1 | 1 | 1 | 1 |
| | BYK378 | 0.3 | 0.3 | 0.3 | 0.3 |
| Polymerization initiator | TPO | 5 | 5 | 5 | 5 |
| | Irgacure 819 | 5 | 5 | 5 | 5 |
| | ITX | 1 | 1 | 1 | 1 |
| Dispersant | BYK JET9151 | 1 | 1 | 1 | 1 |
| Polymerization inhibitor | OH-TEMPO | 0.3 | 0.3 | 0.3 | 0.3 |
| | UV-12 | 0.2 | 0.2 | 0.2 | 0.2 |
| Total | | 100 | 100 | 100 | 100 |
| Stretchability | | 5 | 5 | 5 | 5 |
| Blocking resistance | | 5 | 5 | 5 | 5 |
| Mold sticking-prevention properties | | 5 | 5 | 5 | 5 |
| Crack suppression properties | | 5 | 5 | 5 | 5 |
| Discharge properties | | 5 | 5 | 5 | 5 |

(Table 9)

| Comp. Ex. No. | 1 | 2 | 3 | 4 | 5 | 6 | 7 | 8 | 9 |
|---|---|---|---|---|---|---|---|---|---|
| Magenta mill base | 15 | - | - | - | - | 15 | 15 | 15 | 15 |
| Cyan mill base | - | 9 | - | - | - | - | - | - | - |

(continued)

| Comp. Ex. No. | | 1 | 2 | 3 | 4 | 5 | 6 | 7 | 8 | 9 |
|---|---|---|---|---|---|---|---|---|---|---|
| Yellow mill base | | - | - | 7 | - | - | - | - | - | - |
| Black mill base | | - | - | - | 9 | - | - | - | - | - |
| White mill base | | - | - | - | - | 30 | - | - | - | - |
| Monofunctional monomer | NVC | 24 | 24 | 24 | 24 | 24 | 24 | 24 | 24 | 24 |
| | IBOA | 20 | 20 | 20 | 20 | 20 | 20 | 20 | 20 | 20 |
| | PEA | 25.5 | 31.5 | 34.5 | 32.5 | 11.5 | 25.5 | 24.5 | 24.5 | 26.5 |
| Polyfunctional oligomer | CN996 | 1 | 1 | 1 | 1 | 1 | 1 | 1 | 1 | 1 |
| Resin | BR113 | 1 | 1 | 1 | 1 | 1 | 1 | 1 | 1 | 1 |
| Surfactant | TEGO Rad 2600 (YES) | - | - | - | - | - | - | - | 1 | - |
| | TEGO Rad 2010 (YES) | 1 | 1 | 1 | 1 | 1 | - | - | 1 | |
| | Megaface F558 | - | - | - | - | - | - | 1 | - | - |
| | BYK378 | - | - | - | - | - | 1 | 1 | - | - |
| Polymerization initiator | TPO | 5 | 5 | 5 | 5 | 5 | 5 | 5 | 5 | 5 |
| | Irgacure 819 | 5 | 5 | 5 | 5 | 5 | 5 | 5 | 5 | 5 |
| | ITX | 1 | 1 | 1 | 1 | 1 | 1 | 1 | 1 | 1 |
| Dispersant | BYK JET9151 | 1 | 1 | 1 | 1 | 1 | 1 | 1 | 1 | 1 |
| Polymerization inhibitor | OH-TEMPO | 0.3 | 0.3 | 0.3 | 0.3 | 0.3 | 0.3 | 0.3 | 0.3 | 0.3 |
| | UV-12 | 0.2 | 0.2 | 0.2 | 0.2 | 0.2 | 0.2 | 0.2 | 0.2 | 0.2 |
| Total | | 100 | 100 | 100 | 100 | 100 | 100 | 100 | 100 | 100 |
| Stretchability | | 5 | 5 | 5 | 5 | 5 | 5 | 5 | 2 | 5 |
| Blocking resistance | | 4 | 4 | 4 | 4 | 4 | 1 | 1 | 4 | 1 |
| Mold sticking-prevention properties | | 2 | 2 | 2 | 2 | 2 | 1 | 1 | 3 | 1 |
| Crack suppression properties | | 5 | 5 | 5 | 5 | 5 | 5 | 5 | 5 | 5 |
| Discharge properties | | 5 | 5 | 5 | 5 | 5 | 5 | 1 | 3 | 5 |

(Table 10)

| Comp. Ex. No. | | 10 | 11 | 12 | 13 | 14 | 15 |
|---|---|---|---|---|---|---|---|
| Magenta mill base | | - | - | - | - | 15 | 15 |
| Cyan mill base | | 9 | - | - | - | - | - |
| Yellow mill base | | - | 7 | - | - | - | - |
| Black mill base | | - | - | 9 | - | - | - |
| White mill base | | - | - | - | 30 | - | - |
| Monofunctional monomer | NVC | 24 | 24 | 24 | 24 | 24 | 24 |
| | IBOA | 20 | 20 | 20 | 20 | 20 | 20 |
| | PEA | 32.5 | 35.5 | 33.5 | 12.5 | 25.5 | 14.5 |
| Polyfunctional oligomer | CN996 | 1 | 1 | 1 | 1 | 1 | 1 |
| Resin | BR113 | 1 | 1 | 1 | 1 | 1 | 1 |

(continued)

| Comp. Ex. No. | | 10 | 11 | 12 | 13 | 14 | 15 |
|---|---|---|---|---|---|---|---|
| Surfactant | TEGO Rad 2010 (YES) | - | - | - | - | 1 | 1 |
| | BYK378 | - | - | - | - | 0.02 | 11 |
| Polymerization initiator | TPO | 5 | 5 | 5 | 5 | 5 | 5 |
| | Irgacure 819 | 5 | 5 | 5 | 5 | 5 | 5 |
| | ITX | 1 | 1 | 1 | 1 | 1 | 1 |
| Dispersant | BYK JET9151 | 1 | 1 | 1 | 1 | 1 | 1 |
| Polymerization inhibitor | OH-TEMPO | 0.3 | 0.3 | 0.3 | 0.3 | 0.3 | 0.3 |
| | UV-12 | 0.2 | 0.2 | 0.2 | 0.2 | 0.2 | 0.2 |
| Total | | 100 | 100 | 100 | 100 | 100 | 100 |
| Stretchability | | 5 | 5 | 5 | 5 | 5 | 5 |
| Blocking resistance | | 1 | 1 | 1 | 1 | 4 | 1 |
| Mold sticking-prevention properties | | 1 | 1 | 1 | 1 | 2 | 2 |
| Crack suppression properties | | 5 | 5 | 5 | 5 | 5 | 5 |
| Discharge properties | | 5 | 5 | 5 | 5 | 5 | 1 |

(Examples 64 to 66 and Comparative Examples 16 to 19)

Ink sets were also subjected to the same evaluations as above. As an ink film, a 4 color grey ink film was formed on a substrate using each ink composition described in Table 11 below, and a white ink film was then formed thereon. Evolution was carried out with the white ink film as the outermost surface.

Needless to say, for evaluation of blocking resistance and mold sticking-prevention properties, the outermost surface of the ink film, that is, the white ink film, was the subject of evaluation.

(Table 11)

| Example Comp. Ex. No. | Example 64 | Comp. Ex. 16 | Comp. Ex. 17 | Comp. Ex. 18 | Comp. Ex. 19 | Example 65 | Example 66 |
|---|---|---|---|---|---|---|---|
| Ink set No. | 1 | 2 | 3 | 4 | 5 | 6 | 7 |
| Yellow ink composition | Example 61 | Comp. Ex. 3 | Comp. Ex. 11 | Example 61 | Example 61 | Comp. Ex. 3 | Comp. Ex. 11 |
| Magenta ink composition | Example 63 | Comp. Ex. 1 | Comp. Ex. 9 | Example 63 | Example 63 | Comp. Ex. 1 | Comp. Ex. 9 |
| Cyan ink composition | Example 60 | Comp. Ex. 2 | Comp. Ex. 10 | Example 60 | Example 60 | Comp. Ex. 2 | Comp. Ex. 10 |
| Black ink composition | Example 62 | Comp. Ex. 4 | Comp. Ex. 12 | Example 62 | Example 62 | Comp. Ex. 4 | Comp. Ex. 12 |
| White ink composition | Example 3 | Comp. Ex. 5 | Comp. Ex. 13 | Comp. Ex. 5 | Comp. Ex. 13 | Example 3 | Example 3 |
| Stretchability | 5 | 5 | 5 | 5 | 5 | 5 | 5 |
| Blocking resistance | 5 | 3 | 1 | 4 | 3 | 4 | 3 |
| Mold sticking-prevention properties | 5 | 1 | 1 | 2 | 1 | 3 | 3 |
| Crack suppression properties | 5 | 5 | 5 | 5 | 5 | 5 | 5 |

(continued)

| Example Comp. Ex. No. | Example 64 | Comp. Ex. 16 | Comp. Ex. 17 | Comp. Ex. 18 | Comp. Ex. 19 | Example 65 | Example 66 |
|---|---|---|---|---|---|---|---|
| Discharge properties | 5 | 5 | 5 | 5 | 5 | 5 | 5 |

(Example 67)

A 4 color grey ink film and a white ink film thereon were formed on a transparent substrate (polycarbonate, thickness 400 μm) as a resin sheet in accordance with the inkjet recording method using the white ink of Example 21 and the yellow, magenta, cyan, and black inks of Examples 60 to 63, thus giving a decorative sheet. The decorative sheet thus obtained was molded using a vacuum forming machine (CUVF-1216-PWB, Fu-se Vacuum Forming). Molding conditions were: a mold temperature of 80°C, and a substrate temperature of 150°C, the mold being made of aluminum.

The decorative sheet molded product thus obtained was subjected to in-mold molding using an injection molding machine (SG-50, Sumitomo Heavy Industries, Ltd.) by fixing it to an inner wall of a cavity part of a mold so that the image layer was on the inside and injecting an ABS (acrylonitrile/butadiene/styrene) resin at 220°C toward the image face of the decorative sheet via a gate, thus producing an in-mold molded article.

## Claims

**1.** A radiation-curable ink composition comprising:

a polymerizable compound as Component A;
a photopolymerization initiator as Component B; and
two or more types of surfactants as Component C,
wherein Component A comprises a urethane oligomer having a polymerizable group and a partial structure represented by Formula a-1 below,
Component C comprises at least a surfactant that has a polymerizable group and a surfactant that does not have a polymerizable group, and
the mass ratio of a content $C^1$ of the surfactant that has a polymerizable group and a content $C^2$ of the surfactant that does not have a polymerizable group is $C^1:C^2$=35:1 to 1:10,

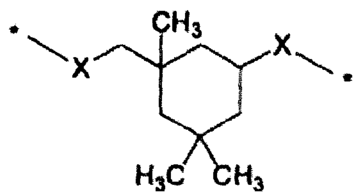

(a-1)

wherein the Xs independently denote a urethane bond (-NH-CO-), an ester bond (-CO-O-), an ethyleneoxy (EO) group, a propyleneoxy (PO) group, or an alkylene group, and * denotes the position of bonding.

**2.** The radiation-curable ink composition according to Claim 1, wherein Component A comprises at least 80 parts by mass of a monofunctional polymerizable compound relative to a content of 100 parts by mass of Component A in the ink composition.

**3.** The radiation-curable ink composition according to Claim 1 or 2, wherein at least one type of surfactant of Component C is a silicone-based surfactant.

**4.** The radiation-curable ink composition according to any one of Claims 1 to 3, wherein the ability to reduce surface tension of the surfactant that does not have a polymerizable group is higher than the ability to reduce surface tension of the surfactant that has a polymerizable group.

**5.** The radiation-curable ink composition according to any one of Claims 1 to 4, wherein the total content of Component C is at least 0.03 mass% but less than 10 mass% relative to the total mass of the ink composition.

6. The radiation-curable ink composition according to any one of Claims 1 to 5, wherein Component A comprises an *N*-vinyl compound, and preferably the content of the *N*-vinyl compound is 10 to 40 mass% relative to the total mass of the ink composition.

7. The radiation-curable ink composition according to any one of Claims 1 to Claim 6, wherein the radiation-curable ink composition further comprises an inert methyl methacrylate homopolymer and/or copolymer

8. The radiation-curable ink composition according to any one of Claims 1 to 7, wherein the content of the urethane oligomer is 0.1 to 10 mass% relative to the total mass of the ink composition.

9. The radiation-curable ink composition according to any one of Claims 1 to 8, wherein the radiation-curable ink composition further comprises a colorant, preferably a white colorant, as Component D.

10. The radiation-curable ink composition according to any one of Claims 1 to 9, wherein Component B comprises a bisacylphosphine oxide compound and a monoacylphosphine oxide compound.

11. The radiation-curable ink composition according to any one of Claims 1 to 10, wherein Component B comprises a bisacylphosphine oxide compound, a monoacylphosphine oxide compound, and a thioxanthone compound.

12. An ink set comprising at least one type of radiation-curable ink composition according to any one of Claims 1 to 11, wherein preferably said at least one type of radiation-curable ink composition is a white ink composition.

13. An inkjet recording method, comprising:

a step of discharging the radiation-curable ink composition according to any one of Claims 1 to 11 onto a recording medium by an inkjet method; and
a step of irradiating the discharged ink composition with actinic radiation to thus cure the ink composition.

14. A decorative sheet comprising a cured image layer provided above a resin sheet, the cured image layer being formed by curing the radiation-curable ink composition according to any one of Claims 1 to 11.

15. A decorative sheet molded product obtained by subjecting the decorative sheet according to Claim 14 to vacuum forming, pressure forming, or vacuum/pressure forming, wherein preferably the decorative sheet molded product is further subjected to hole making after said vacuum forming, pressure forming, or vacuum/pressure forming.

16. A process for producing an in-mold molded article, comprising:

a step of placing the decorative sheet according to Claim 14 or the decorative sheet molded product according to Claim 15 on an inner wall of a cavity part formed by a plurality of molds; and
a step of injecting a molten resin into the cavity part via a gate.

17. An in-mold molded article obtained by the production process according to Claim 16.

## Patentansprüche

1. Strahlungshärtbare Tintenzusammensetzung aufweisend:

eine polymerisierbare Verbindung als Komponente A;
einen Fotopolymerisationsinitiator als Komponente B; und
zwei oder mehr Arten von oberflächenaktiven Mitteln als Komponente C,
wobei Komponente A ein Urethan-Oligomer mit einer polymerisierbaren Gruppe und einer Teilstruktur, die durch Formel a-1 unten repräsentiert wird, aufweist,
Komponente C mindestens ein oberflächenaktives Mittel, das eine polymerisierbare Gruppe hat, und ein oberflächenaktives Mittel, das keine polymerisierbare Gruppe hat, aufweist, und
das Massenverhältnis eines Gehalts $C^1$ des oberflächenaktiven Mittels, das eine polymerisierbare Gruppe hat, und eines Gehalts $C^2$ des oberflächenaktiven Mittels, das keine polymerisierbare Gruppe hat, $C^1$:$C^2$=35:1 bis 1:10 beträgt,

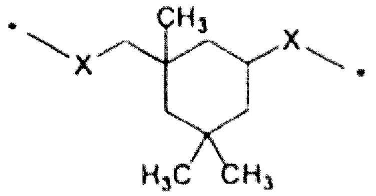

(a - 1)

wobei die Xe unabhängig eine Urethanbindung (-NH-CO-), eine Esterbindung (-CO-O-), eine Ethylenoxy (EO)-Gruppe, eine Propylenoxy (PO)-Gruppe oder eine Alkylen-Gruppe bezeichnen, und * die Bindungsposition bezeichnet.

2. Strahlungshärtbare Tintenzusammensetzung nach Anspruch 1, wobei Komponente A mindestens 80 Masseteile einer monofunktionellen polymerisierbaren Verbindung, bezogen auf einen Gehalt von 100 Masseteilen der Komponente A in der Tintenzusammensetzung, aufweist.

3. Strahlungshärtbare Tintenzusammensetzung nach Anspruch 1 oder 2, wobei mindestens eine Art von oberflächenaktivem Mittel der Komponente C ein oberflächenaktives Mittel auf Silikon-Basis ist.

4. Strahlungshärtbare Tintenzusammensetzung nach einem der Ansprüche 1 bis 3, wobei die Fähigkeit zur Verringerung der Oberflächenspannung des oberflächenaktiven Mittels, das keine polymerisierbare Gruppe hat, höher ist als die Fähigkeit zur Verringerung der Oberflächenspannung des oberflächenaktiven Mittels, das eine polymerisierbare Gruppe hat.

5. Strahlungshärtbare Tintenzusammensetzung nach einem der Ansprüche 1 bis 4, wobei der Gesamtgehalt an Komponente C mindestens 0,03 Masse%, aber weniger als 10 Masse%, bezogen auf die Gesamtmasse der Tintenzusammensetzung, beträgt.

6. Strahlungshärtbare Tintenzusammensetzung nach einem der Ansprüche 1 bis 5, wobei Komponente A eine N-Vinylverbindung aufweist, und wobei der Gehalt an der N-Vinylverbindung bevorzugt 10 bis 40 Masse%, bezogen auf die Gesamtmasse der Tintenzusammensetzung, beträgt.

7. Strahlungshärtbare Tintenzusammensetzung nach einem der Ansprüche 1 bis 6, wobei die strahlungshärtbare Tintenzusammensetzung außerdem ein inertes Methylmethacrylat-Homopolymer und/oder -Copolymer aufweist.

8. Strahlungshärtbare Tintenzusammensetzung nach einem der Ansprüche 1 bis 7, wobei der Gehalt an dem Urethan-Oligomer 0,1 bis 10 Masse%, bezogen auf die Gesamtmasse der Tintenzusammensetzung, beträgt.

9. Strahlungshärtbare Tintenzusammensetzung nach einem der Ansprüche 1 bis 8, wobei die strahlungshärtbare Tintenzusammensetzung außerdem einen Farbstoff, bevorzugt einen weißen Farbstoff, als Komponente D aufweist.

10. Strahlungshärtbare Tintenzusammensetzung nach einem der Ansprüche 1 bis 9, wobei Komponente B eine Bisacylphosphinoxid-Verbindung und eine Monoacylphosphinoxid-Verbindung aufweist.

11. Strahlungshärtbare Tintenzusammensetzung nach einem der Ansprüche 1 bis 10, wobei Komponente B eine Bisacylphosphinoxid-Verbindung, eine Monoacylphosphinoxid-Verbindung und eine Thioxanthon-Verbindung aufweist.

12. Tintenset aufweisend mindestens eine Art von strahlungshärtbarer Tintenzusammensetzung nach einem der Ansprüche 1 bis 11, wobei die mindestens eine Art von strahlungshärtbarer Tintenzusammensetzung bevorzugt eine weiße Tintenzusammensetzung ist.

13. Tintenstrahl-Aufzeichnungsverfahren aufweisend:

einen Schritt des Ausstoßens der strahlungshärtbaren Tintenzusammensetzung nach einem der Ansprüche 1 bis 11 auf ein Aufzeichnungsmedium durch ein Tintenstrahlverfahren; und
einen Schritt des Bestrahlens der ausgestoßenen Tintenzusammensetzung mit aktinischer Strahlung, um die Tintenzusammensetzung so zu härten.

**14.** Dekorflachmaterial aufweisend eine gehärtete Abbildungsschicht, die über einer Harzschicht vorgesehen ist, wobei die gehärtete Abbildungsschicht durch Härten der strahlungshärtbaren Tintenzusammensetzung nach einem der Ansprüche 1 bis 11 gebildet ist.

**15.** Dekorflachmaterial-Formprodukt, das erhalten wurde durch Unterziehen des Dekorflachmaterials nach Anspruch 14 einem Vakuumformen, einem Druckformen oder einem Vakuum/Druck-Formen, wobei das Dekorflachmaterial-Formprodukt außerdem nach dem Vakuumformen, Druckformen oder Vakuum/Druck-Formen bevorzugt einem Lochen unterzogen wird.

**16.** Verfahren zur Herstellung eines In-Mold-Formgegenstands, aufweisend:

einen Schritt des Anbringens des Dekorflachmaterials nach Anspruch 14 oder des Dekorflachmaterial-Formprodukts nach Anspruch 15 an einer Innenwand eines Hohlraumteils, das von einer Mehrzahl von Formen gebildet wird; und
einen Schritt des Einspritzens eines geschmolzenen Harzes in das Hohlraumteil mittels eines Einlasses.

**17.** In-Mold-Formgegenstand, der erhalten wurde durch das Herstellungsverfahren nach Anspruch 16.

**Revendications**

**1.** Composition d'encre durcissable par rayonnement, comprenant :

un composé polymérisable comme composant A ;
un initiateur de photopolymérisation comme composant B, et
deux ou plus types de surfactants comme composant C,
dans laquelle le composant A comprend un oligomère d'uréthane présentant un groupe polymérisable et une structure partielle représentée par la formule a-1 ci-après ;
le composant C comprend au moins un surfactant présentant un groupe polymérisable et un surfactant ne présentant pas de groupe polymérisable, et
le rapport de masse entre une teneur $C^1$ en surfactant présentant un groupe polymérisable et une teneur $C^2$ en surfactant ne présentant pas de groupe polymérisable s'étend de $C^1$:$C^2$ = 35 : 1 à 1 : 10,

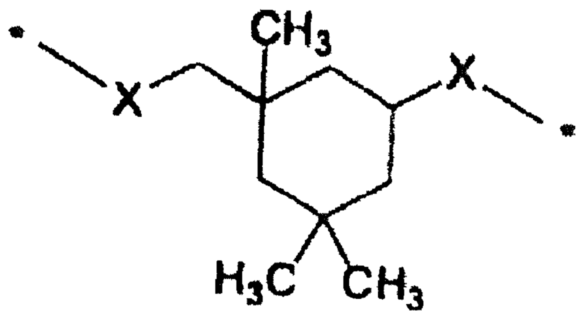

(a - 1)

dans lequel les X indiquent indépendamment une liaison uréthanne (-NH-CO-), une liaison ester (-CO-O-), un groupe éthylèneoxy (EO), un groupe propylèneoxy (PO), ou un groupe alkylène, et * indique la position de liaison.

**2.** Composition d'encre durcissable par rayonnement selon la revendication 1, dans laquelle le composant A comprend au moins 80 parties en mase d'un composé polymérisable monofonctionnel par rapport à une teneur de 100 parties en masse du composant A dans la composition d'encre.

**3.** Composition d'encre durcissable par rayonnement selon la revendication 1 ou 2, dans laquelle au moins un type de surfactant du composant C est un surfactant à base de silicone.

**4.** Composition d'encre durcissable par rayonnement selon l'une quelconque des revendications 1 à 3, dans laquelle la capacité à réduire une tension superficielle du surfactant ne présentant pas de groupe polymérisable est supérieure à la capacité de réduire la tension superficielle du surfactant présentant un groupe polymérisable.

5. Composition d'encre durcissable par rayonnement selon l'une quelconque des revendications 1 à 4, dans laquelle la teneur totale du composant C est au moins égale à 0,03 % en masse, mais est inférieure à 10 % en masse par rapport à la masse totale de la composition d'encre.

6. Composition d'encre durcissable par rayonnement selon l'une quelconque des revendications 1 à 5, dans laquelle le composant A comprend un composé N-vinyle, et de préférence, la teneur du composé N-vinyle s'étend de 10 à 40 % en masse par rapport à la masse totale de la composition d'encre.

7. Composition d'encre durcissable par rayonnement selon l'une quelconque des revendications 1 à 6, dans laquelle la composition d'encre durcissable par rayonnement comprend en outre un homopolymère et/ou un copolymère inerte de méthacrylate de méthyle.

8. Composition d'encre durcissable par rayonnement selon l'une quelconque des revendications 1 à 7, dans laquelle la teneur en oligomère d'uréthane s'étend de 0,1 à 10 % en masse par rapport à la masse totale de la composition d'encre.

9. Composition d'encre durcissable par rayonnement selon l'une quelconque des revendications 1 à 8, dans laquelle la composition d'encre durcissable par rayonnement comprend en outre un colorant, de préférence un colorant blanc, comme composant D.

10. Composition d'encre durcissable par rayonnement selon l'une quelconque des revendications 1 à 9, dans laquelle le composant B comprend un composé oxyde de bisacylphosphine, et un composé oxyde de mononoacylphosphine.

11. Composition d'encre durcissable par rayonnement selon l'une quelconque des revendications 1 à 10, dans laquelle le composant B comprend un composé oxyde de bisacylphosphine, un composé oxyde de mononoacylphosphine, et un composé thioxanthone.

12. Jeu d'encres comprenant au moins un type de composition d'encre durcissable par rayonnement selon l'une quelconque des revendications 1 à 11, dans lequel de préférence, le au moins un type de composition d'encre durcissable par rayonnement est une composition d'encre blanche.

13. Procédé d'enregistrement par jet d'encre, comprenant les étapes suivantes :

    une étape pour déverser la composition d'encre durcissable par rayonnement selon l'une quelconque des revendications 1 à 11 sur un support d'enregistrement par un procédé par jet d'encre, et
    une étape pour irradier la composition d'encre déversée avec un rayonnement actinique, afin ainsi de durcir la composition d'encre.

14. Feuille décorative comprenant une couche d'image durcie fournie au-dessus d'une feuille en résine, la couche d'image durcie étant formée en faisant durcir la composition d'encre durcissable par rayonnement selon l'une quelconque des revendications 1 à 11.

15. Produit moulé pour feuille décorative obtenu en soumettant la feuille décorative selon la revendication 14 à un formage sous vide, un formage sous pression, ou un formage sous vide/sous pression, dans lequel de préférence, le produit moulé pour feuille décorative est en outre soumis à une création de trous après lesdits formage sous vide, formage sous pression ou formage sous vide/sous pression.

16. Processus pour produire un article moulé en moule, comprenant les étapes suivantes :

    une étape pour placer la feuille décorative selon la revendication 14 ou le produit moulé pour feuille décorative selon la revendication 15 sur une paroi intérieure d'une partie de cavité formée par une pluralité de moules, et
    une étape pour injecter une résine fondue dans la partie de cavité pat le biais d'une tête.

17. Article moulé en moule obtenu par un processus de production selon la revendication 16.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013216784 A
- JP 2013177580 A
- JP 2010132827 A
- JP 2010222386 A
- GB 2489321 A
- WO 9931161 A1
- EP 2088176 A1
- JP 47006416 B
- JP 47003981 B
- JP 47022326 B
- JP 47023664 B
- JP 57030704 A
- JP 60026483 B
- JP 60026403 B
- JP 62081345 A
- JP 1034242 B
- US 4318791 A
- EP 0284561 A1
- JP 2211452 A
- JP 61194062 A
- JP 2009597 B
- JP 2009596 B
- JP 63061950 B
- JP 59042864 B
- JP 62173463 A
- JP 62183457 A
- JP 57009053 B
- JP 62135826 A
- JP 2009221416 A
- US 6084250 A
- JP 60132767 A
- WO 9954415 A


### Non-patent literature cited in the description


- **J. P. FOUASSIER ; J. F. RABEK.** *RADIATION CURING IN POLYMER SCIENCE AND TECHNOLOGY,* 1993, 77-117